# EUROPEAN PATENT SPECIFICATION

(11) **EP 4 498 357 B1**
(45) Date of publication and mention of the grant of the patent: **07.10.2026**
(21) Application number: 23193030.6
(22) Date of filing: 23.08.2023
(51) Int. Cl.: G10H 1/00, G10L 15/10, G10L 25/51, G10H 1/36, G06F 40/20

(54) **METHOD AND DEVICE FOR CREATING A PERSONALIZED SOUND ENVIRONMENT FOR A USER**
VERFAHREN UND VORRICHTUNG ZUM ERZEUGEN EINER PERSONALISIERTEN KLANGUMGEBUNG FÜR EINEN BENUTZER
PROCÉDÉ ET DISPOSITIF POUR LA CRÉATION D'UN ENVIRONNEMENT SONORE PERSONALISÉ POUR UN UTILISATEUR

(30) Priority: 24.07.2023 US 202318357611
(43) Date of publication of application: 29.01.2025
(73) Proprietor: Endel Sound GmbH, 14193 Berlin (DE)
(72) Inventor: Stavitskii, Oleg, 14193 Berlin (DE); Terekhov, Vladimir, 14193 Berlin (DE); Evgrafov, Dmitry, 14193 Berlin (DE); Bulatsev, Kyrylo, 14193 Berlin (DE); Petrenko, Philipp, 14193 Berlin (DE); Bezugly, Dmitry, 14193 Berlin (DE); Gurzhiy, Evgeny, 14193 Berlin (DE)
(74) Representative: MERH-IP Matias Erny Reichl Hoffmann Patentanwälte PartG mbB

(56) References cited:
- WO-A1-2021/211602
- US-A1- 2022 101 858
- US-B2- 7 242 952
- OCAMPO RODOLFO ET AL: "Using GPT-3 to Achieve Semantically Relevant Data Sonificiation for an Art Installation", 1 April 2023, ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE], SPRINGER INTERNATIONAL PUBLISHING, CHAM, PAGE(S) 212 - 227, ISBN: 978-3-030-90436-4, ISSN: 0302-9743, XP047657922
- PEILING LU ET AL: "MuseCoco: Generating Symbolic Music from Text", ARXIV.ORG, CORNELL UNIVERSITY LIBRARY, 201 OLIN LIBRARY CORNELL UNIVERSITY ITHACA, NY 14853, 31 May 2023 (2023-05-31), XP091525134

## Description

### CROSS-REFERENCE TO RELATED APPLICATIONS

This application is a continuation-in-part of U.S. Patent Application No. 17/815,126 filed July 26, 2022 and entitled "SYSTEMS AND METHODS FOR GENERATING A CONTINUOUS MUSIC SOUNDSCAPE USING AUTOMATIC COMPOSITION," which is a continuation-in-part of U.S. Patent Application No. 17/665,353 filed February 4, 2022 and entitled "SYSTEM AND METHOD FOR CREATING A PERSONALIZED USER ENVIRONMENT," which is a continuation of U.S. Patent Application No. 16/674,844, filed November 5, 2019 and entitled "SYSTEM AND METHOD FOR CREATING A PERSONALIZED USER ENVIRONMENT", which claims the benefit of U.S. Provisional Patent Application No. 62/755,725, filed November 5, 2018.

### BACKGROUND

Technological innovation, while improving productivity, has increasingly raised stress levels in day-to-day life. The daily demands on life have become more numerous and fast-paced while the level of daily distractions has increased. New systems need to be implemented in order to address this.

Individual attempts to deal with these stress-causing issues frequently involve activities such as meditation and exercise, often accompanied by music or soundscapes to augment the experience. However, these soundscapes are generally homogenous, of limited length and are not adaptive to a user's evolving environment or state. What is needed is a system for automatically and dynamically accessing information relevant to an individual's state and surroundings and present to the individual a personalized transmission(s) of sound for various activities, such as relaxation, focus, sleep, exercise, etc.

Music or soundscapes can additionally be used to accompany storytelling activities, which can include spoken-word storytelling and/or written-word storytelling, among various other forms. For example, audio compositions underlying storytelling can augment the experience by conveying richer information to a user, for instance by aurally conveying the mood, tone, or style of a story (or portion thereof). This contextual information can encapsulate various different elements or themes of a written work, whether it be the rapid and anxious tone of a suspenseful event, or the calm and quiet moments of a sunny day in nature.

Using audio compositions to aurally convey contextual or other related information for a textual work can improve comprehension and focus for a reader or listener. For example, aurally conveyed contextual information corresponding to a textual work may better engage a reader with the storyline, by deepening the reader's connections to the events of a particular scene, character, etc. Augmenting a first information-conveying modality (e.g., text) with contextual information presented via a second information-conveying modality (e.g., audio composition or soundscape) can provide a more immersive and captivating experience for users.

### SUMMARY

The invention is as defined by the appended claims.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof, which are illustrated in the appended drawings. In the drawings, like reference numbers can indicate identical or functionally similar elements. Understanding that these drawings depict only example embodiments of the disclosure and are not therefore to be considered to be limiting of its scope, the principles herein are described and explained with additional specificity and detail through the use of the accompanying drawings in which:
FIG. 1 illustrates an example architecture of a network for implementing a method for creating a personalized sound environment for a user.
FIG. 2 is a flowchart illustrating the steps for creating a personalized sound environment for a user.
FIG. 3 is a flow diagram showing sensor inputs to a processor for processing raw input data for determining an actionable user description representative of a user's state.
FIG. 4 is a flow diagram showing library inputs based on a determined user's state for sequencing sounds for presentation to the user.
FIG. 5 shows the selection and flow of information for creating sound output for presentation to the user.
FIG. 6 shows a diagram of the sound layers that are responsive to a user's mode, state, and context.
FIG. 7 shows a chart of sound layers for presentation to a user based on user mode and sensory and environmental inputs.
FIG. 8 illustrates an exemplary construction of a soundscape whereby soundscapes are comprised of phases, phases are comprised of sections, and sections are comprised of layers;
FIG. 9 illustrates an exemplary construction of a sound section by the overlaying of sound layers;
FIG. 10 illustrates an exemplary soundscape composed of various phases;
FIG. 11 illustrates an exemplary soundscape for sleep;
FIG. 12 illustrates various sound phases that could be used to construct a soundscape;
FIG. 13 illustrates how phases may be sequenced together under varying conditions to form a soundscape;
FIG. 14 illustrates an example of sequencing phases together to generate a dynamic soundscape based on one or more varying conditions;
FIG. 15 illustrates an example construction of a soundscape comprising a plurality of sections corresponding to text-based inputs;
FIG. 16 is a flow diagram illustrating an example process for automatically generating a continuous music soundscape using a text-based sound engine, in accordance with some examples; and
FIG. 17 is a block diagram illustrating an example of a text analysis engine that can be used with a sound generation engine to automatically generate soundscapes based on one or more textual inputs, in accordance with the invention.

### DETAILED DESCRIPTION

Various example embodiments of the disclosure are discussed in detail below. While specific implementations are discussed, it should be understood that these are described for illustration purposes only. A person skilled in the relevant art will recognize that other components and configurations may be used without parting from the scope of the claims.

Thus, the following description and drawings are illustrative and are not to be construed as limiting the scope of the embodiments described herein. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the claims of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

It should be further noted that the description and drawings merely illustrate the principles of the proposed device.

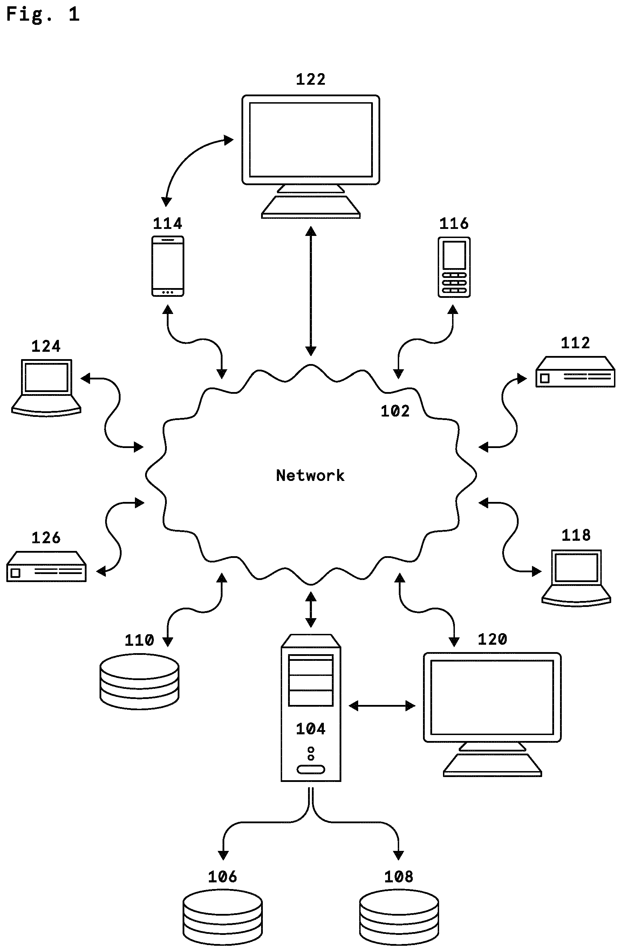

Referring first to FIG. 1, there is shown an exemplary architecture of a network and system for implementing a method for creating a personalized sound environment for a user. The network 102 across which transmissions of information, data and sound in exemplary embodiments occur, can include any private or public, wired or wireless network, including but not limited to Local Area Networks, Wide Area Networks, the Internet, the World Wide Web, radio frequency (RF), Bluetooth, and a Cloud-based network. There is shown an exemplary network sound server 104 and one or more databases and/or storage devices 106, 108, and 110. There may be more servers, more databases, and more storage devices 110 than those displayed in FIG. 1, with the servers minimally configured with memory, storage media, at least one processor, communication resources, and with databases and files being external to or integrated with the servers. There are one or more user devices 114-120, platforms, or channels, for utilizing the personalized sound system and for the presentation of personalized sounds to individual users. For convenience and not limitation, users are collectively represented as a smart phone 114. The system 100 can affect the analysis of sensor data, environmental information, user input, and library sounds; and transmission of personalized sounds to users of devices 114 through the network sound server 104 and network 102. The personalized sound system 100 extends to software, programs, and routines within storage media on each of the user devices and network server.

The user devices 114 for receiving, playing, and displaying the personalized sounds are representatively shown as a smart phone 114, a cell phone 116, a portable tablet or laptop computer 118, and a desktop computer 120. Examples of user devices 114 include, but are not limited to, wireless user equipment and communication devices, such as, for example, mobile telephones, smart phones, personal digital assistants, electronic readers, portable electronic tablets, personal computers, and laptop computers. Each representative user device 114 minimally comprises a processor, a memory coupled to the processor, computer readable media, facilities for entering information into the user device 114, and an antenna or other wired or wireless connection device coupled to the processor for receiving and transmitting information, messages, commands or instructions, and sounds. A display on the user device 114 can include touch screen technology for the entry of user information required by the system and information related to the environment, including location, of the user. The information can be entered, for example, in text form or by touching action buttons displayed on the screen or integrated with the body of the user device 114. Alternately, user entry of information can be through use of a physical or touch screen keyboard or by voice.

Output and readings from a plurality of sensor devices 112 are received by the sound system 100, and particularly by the network sound server 104. The information and data received from the sensor devices 112 include information related to the user and the environment in which the user is situated. This sensor data is utilized to assist with selection of sounds to present to the user, as discussed in more detail below.

The sounds system 100 alternately includes one or more receiver devices 122 and 124 for receiving information and commands from the user devices 114. These receiver devices are collectively represented as a computer 122. The receiver devices 122 can be any type of computing device having communications and display facilities in the same manner of the user devices 114. One to many receiver devices 122 are in communication with the system 100 and can communicate from a plurality of different devices and via a plurality of different communication protocols, as described above regarding the remote user device 114. While FIG. 1 shows all communications being directed to the network sound server 104, exemplary embodiments are not so limited; and communications can be provided directly through the network 102 between the user devices 114 and the receiver devices 122 for receiving information from the user devices 114 and presenting sounds to the user devices 114.

Exemplary embodiments are implemented on the network sound server 104 and on the computers of the user devices 114 and, alternately on the receiver devices 122. Computer readable and executable instructions, or software, are provided for directing the processing of the computers of the exemplary devices 114, 122, and 104, including processing the steps of exemplary embodiments of the sound system 100. The computer executable instructions, when executed by the computers 114, 122, and 104 and/or the processors associated with each of said computers, provide for the presentation of personalized sounds to the user devices 114 and the control of the user's environment.

One or more storage devices 106, 108, and 110 are provided for storage of information regarding resources available for composing sounds to be presented to the user devices 114. This information includes, but is not limited to, user profiles, note sequence files, raw audio files, files of single note sounds, sound tones, and sounds from musical instruments. The stored information can also include past sounds presented to the user. The storage devices can retain data and information as files, libraries, and directories, for example. Access to and usage this information to compose sounds to be presented to the user is discussed in more detail below.

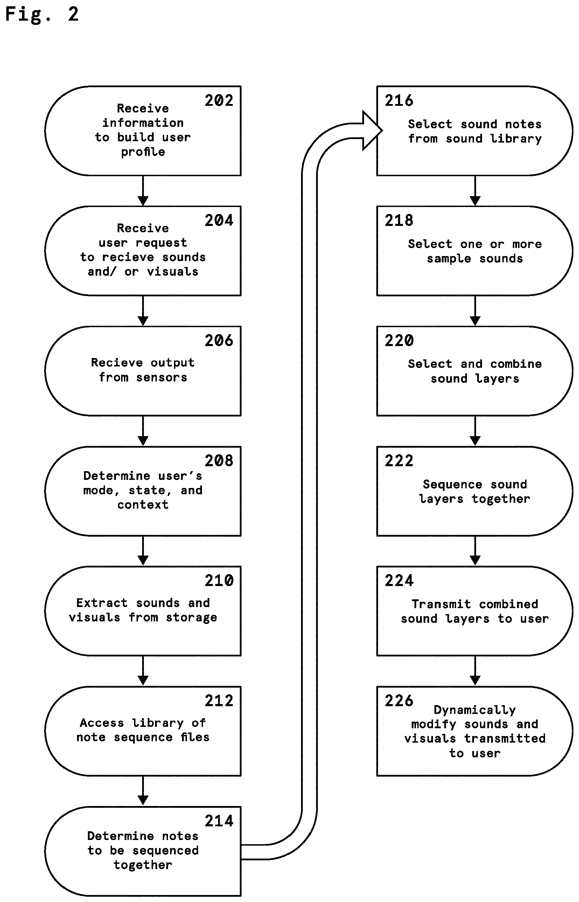

Computer readable media includes computer storage media, which includes volatile and non-volatile media, removable and non-removable media implemented in any method or technology for the storage of information, including computer readable instructions, data structures, display templates, and responder information. Computer storage media includes, but is not limited to magnetic media (e.g., a hard disk), non-transitory memory, optical media (e.g., a DVD), memory devices (e.g., random access memory), and the like. In some embodiments, computer readable instructions are configured such that, when executed by a processor, the instructions cause the processors of the exemplary computers 114, 122, and 104 to perform steps described below of the sound system (e.g., steps described below with reference to the flow chart shown in FIG. 2). In other embodiments, the exemplary computers 114, 122, and 104 are configured to perform steps described below without the need for instructions. Therefore, the features of the present embodiments described herein may be implemented in any suitable combination of hardware and/or software. Computer storage media does not include a carrier wave or any other propagated data signal.

The system and method described herein can automatically compose personalized soundscapes, based on one or more sensor inputs, for various modes and purposes, which can include but are not limited to sleep, focus, exercise, etc. In some examples, the automatic composition of personalized soundscapes includes an automatic and/or dynamic (e.g., real-time) modification of a personalized soundscape that was previously generated or composed according to the system and method described herein. In some embodiments, the methodology for generating personalized sound environments for users is based on circadian rhythms, pentatonic scale, and sound masking. The generated sounds automatically adapt, without any user input, to different inputs, such as time of day, weather, heart rate, and location. The process begins with the user opening an application on the user's device. The user's device is preferably a portable device connected to a network such as the Internet. However, the disclosed system and method will perform well on a user device that is not connected to a network or on a user device that is not portable, with local storage files, media, and software.

Referring now to FIG. 2, depicted is a flowchart of a method for composing and presenting personalized sounds to a user, based on that user's environment and state. The present invention provides a method for creating a personalized environment to address a person's individual environment, mode or needed mode, state, and context, including receiving and analyzing sensor data representative of a user's environment and state and utilizing the analyzed data with libraries of sounds to compose and present to the user a dynamic, personalized stream of sounds. The sounds to be presented to the user are comprised of a created composition of notes, sounds, and instrument sounds in multiple combinations and layers. This sounds presentation is in contrast to presenting known music scores or a music playlist for user selection and/or listening. Hereinafter, the steps of this method will be described in detail.

At step 202, the application presents a number of questions and categories to the user to establish a user profile, the profile may include user preferences, such as related to music, genre, sound, activities, vocation, avocations, images, colors, and weather. The system builds a profile of the user based on the received user information in response to the questions and selected categories. The user can change the profile at will upon identified authorization.

At step 204, a request is received from the user to receive sounds from the system, based on the user's environment and state. The request can also indicate particular user-related environmental or state information, such as the user requesting sounds for a certain period of time and/or the user expressly requesting sounds to provide relax, focus, or activity modes for the user. Alternately, the user's profile can provide this information. Also, the user can establish a profile that instructs the system to automatically initiate presentation of sounds/ at a particular time of day or day of the week, or upon determining a particular state of the user, such as a high heartrate or blood pressure, or prolonged driving.

At step 206, the application receives the outputs from sensors 112 and from the user; and from those outputs can determine an actionable description for the user. Such an actionable description includes a user mode, a user state, a user context, and a user physical environment. Based on the user's determined actionable description, the system can determine the user's status and can determine sounds to positively impact the user. The sensors 112 can provide location information, such as from a global positioning receiver (GPS) on the user's device 114. The received GPS information can be continual such that the system can determine whether the user is stationary, walking, running, or driving. With this information, the system can partially determine the sounds to present to the user. For example, a stationary state of the user suggests the user may be at work; and the system selects focus-related sounds for presentation. Similarly, if the user is determined to be walking or running, energizing (i.e., upbeat) sounds can be selected for presentation. Alternately, the user may have established a profile indicating that relaxing sounds are preferred for walking. If the user is determined to be driving, based on the speed and the path whereby the GPS signals are changing and by traffic information input, a combination of relaxing and focusing sounds/music can be selected for presentation. Further, the location information can determine to which channel or platform to transmit the sounds/ to the user, such as the user's work computer, the user's mobile phone, or the user's home computer or smart speaker system. The system is adaptable to deliver personalized sounds to a user over a network or a cloud-based service regardless of where the user is located or moving toward. Parameters can be established to weight the relative importance and impact of the outputs from the sensors based on the user profile and preferences, perhaps, for example, giving more significance to heartrate and blood pressure for an older user.

The sensors 112 can also provide the physical information, such as the heartrate and/or the blood pressure, of the user. The heartrate information, coupled with other sensor data, helps the system determine the user's state and the user's changing state (such as when the heartrate increases or decreases). The system can compare the user's heartrate against a medical standard for persons of the user's profile, such as age, weight, and exercise regiment, or from an accumulated history of the user's heartrate. This comparison can suggest the user is more or less stressed, is engaged in more or less strenuous activity, is more or less relaxed; and the system can dynamically adjust the sounds presented to the user to relax the user, cause the user to better focus, to help energize the user, and to help the user fall asleep. Similarly, the user's blood pressure, if elevated compared to a standard or the user's history, can signal a stressful condition for which soothing or relaxed sounds should be presented.

Other sensors 112 provide weather data, knowing that high winds, excess temperatures (high or low), bright or diminished light, and rapidly changing barometric pressure can affect an individual's mood and stress level. In recognition of the environment in which the user is functioning, the system can provide sounds to counter the user's environmental effect, such as providing energizing sounds in response to low light.

Further sensors 112 provide data regarding the user's steps, cadence, and movement type. Such information helps determine what the user is doing, in addition to the more global GPS data. This information can help specifically determine whether the user is walking in a relaxed manner, rushing to get to an appointment on time, climbing stairs, sitting at a desk, or running. This information, coupled with time and date information from a clock sensor can help determine when the user is moving related to work, running in the morning or evening, or sitting at home relaxing. The various sensor information helps the system determine the environment in which the user is functioning and the state of the user-all performed dynamically without expressly asking the user to provide this information. The system responds to this information by automatically selecting sounds for improving the user's circumstance, by providing relaxing, motivating, energizing, on the go, etc. sounds.

The received sensor information can be stored in a storage device 106, 108, or 110, along with determined sounds presented to the user for a library of data for subsequent analysis and presentation to the user. For example, the stored heartrate data can be compared to the user's current heartrate to determine whether the user's current heartrate is elevated or low. Further, past presented sounds can be labeled for subsequent presentation under similar user states if the past presented sounds were designated at being successful as, for example, providing relaxing, motivating, soothing, or energizing sounds, as determined by subsequent user comment or behavior.

At step 208, an actional description of the user is determined based on the user input, the user profile, and the sensor outputs. The user's mode, state, and/or context is determined based on analysis of the received sensor information and, alternately, information in the user's profile. As discussed above, the analyzed sensor data and profile data can determine whether the user is stressed, is relaxed, is at work, is at home, is at the gym, needs to relax, needs to focus, needs to be energized, and so on. Additionally, the user can provide input to specify her state or context, can permit the system to provide sounds appropriate to her state or context, or can expressly request the type of sounds to be presented. The state of the user relates to mental and physical condition of the user, such as stressed, relaxed, asleep, running, needing to focus, and so on. The context of the user relates to the environment of the user, such as whether the user is at work, outside, or outside; what the weather is for the user, what the date and time of day is, and what is the lighting level and the temperature of the user's environment. The combined determined mode, state, and context of the user can be referred to as the user status.

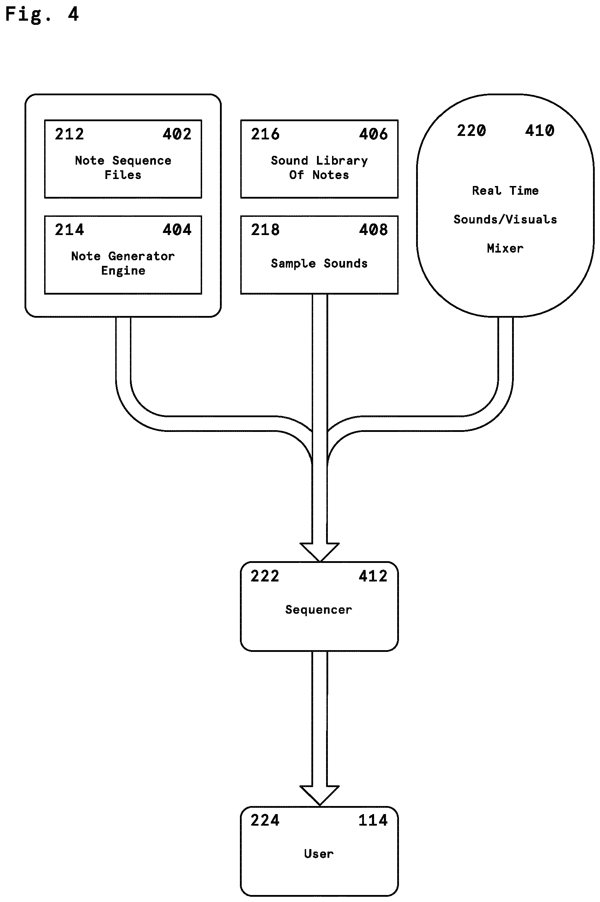

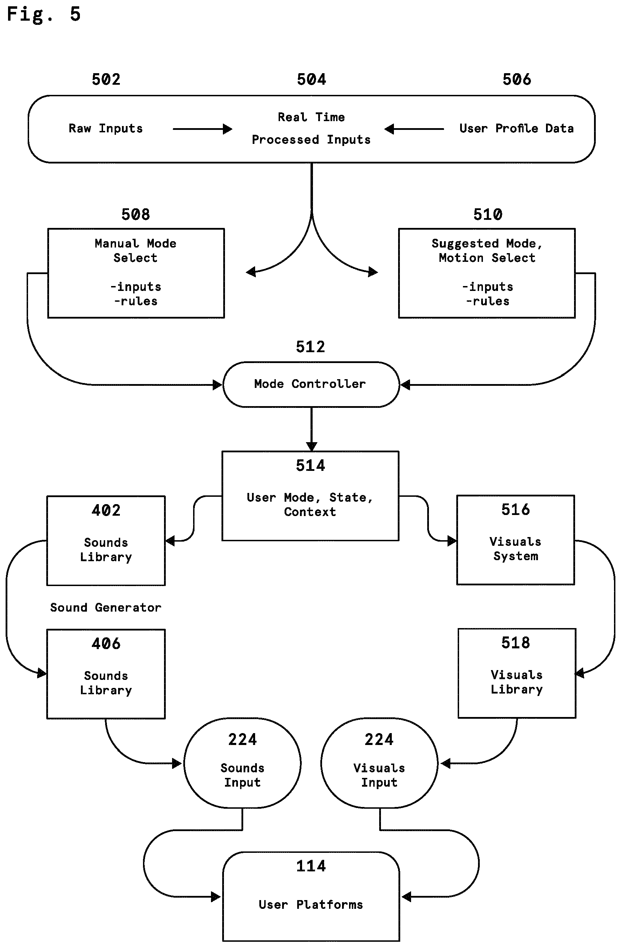

At step 210, based on the user's determined or specified status, the system extracts sounds from a storage library or libraries for creating sounds for presentation to the user, based on the user's profile and specified input. Referring also to FIGS. 4 and 5, and as explained above regarding step 202, raw inputs 502 are received from the user to be processed and create a user profile 506. From the user profile, user input, and/or the sensor information, a motion and mode of the user is determined, as shown at 510-514.

From this motion and mode, the sound engine composes a dynamic soundscape using a unique granular system in which smaller sound sections are sequenced together in order to create sound phases which define a particular user activity, user state and user model. These sound phases, in turn, may then compose much larger and dynamic soundscapes of indefinite length when the user's condition changes according to conditional rule sets.

Firstly, sounds sections comprising layered sounds allow for the control of sound development in a soundscape on a more granular scale. For example, small changes in a user's heart rate may subtly change the tempo. Sections are also responsible for structural composition and development within a phase, such as to allow for introductions, as well as body and bridge sound sections. For instance, introductions to a particular phase may comprise a single melody or progression of chords to garner the listener's attention and set the tone of the particular phase. A bridge may tie together two contrasting sections of a phase, whereas the phase body is generally a recurring section. Altogether, this creates a more homogenous soundscape adapted to a particular set of conditions. In the creation of these smaller sound sections, the system at step 212 accesses a library of note sequence files 402 divided by intensity. The note sequence files are random musical scores of note sequences, typically of 10-20 second duration that can be repeated continuously until the presentation is terminated by time, by a determined change user state or context, or by user request. The selected score(s) is selected or created by the software or firmware of the note generator engine 404, which also determines the sequence of the notes and the duration of the notes sequences, based on the determined user's state or context. At step 214, the note generator 404 additionally determines, based on rules and past successful presentations to the user, which notes can be sequenced together or one after another. For example, notes of extremely differing pitches, tone, or sound are not sequenced together to provide relaxing or soothing sounds; whereas such contrasts can be useful to provide energizing sounds. Based on which notes are known to work together under the rules and past presentations, the sound generator 404 can create sequences of up to 40 notes which can be presented repeatedly or can be re-sequenced to provide a presentation variety or in response to changing sensor information.

The third source of sounds is selected at step 216 from a sound library 406 comprised of raw audio files of single notes. Again, the determined state, context, and/or user profile will determine the particular notes. For example, notes at the lower end of the musical scale can be more soothing and are selected by the system for presenting soothing or relaxing sounds. The various notes in the musical scale can be chromatically mapped to instruments sounds for having available instrument sounds for each scaled note.

A fourth source of sounds is selected at step 218 from a library of sample sounds 408, based on the determined user state, context, and/or profile. These sample sounds can include sounds from nature, white noise sounds, vocals, sounds from musical instruments, etc. These sounds could be up to several minutes in duration, and again are selected based on the determined state, context, and/or user profile. For example, a trumpet sound can be selected for a more energized sound for presenting to a user who is running or needs motivation. The sounds from multiple samples can be selected for presentation to a user.

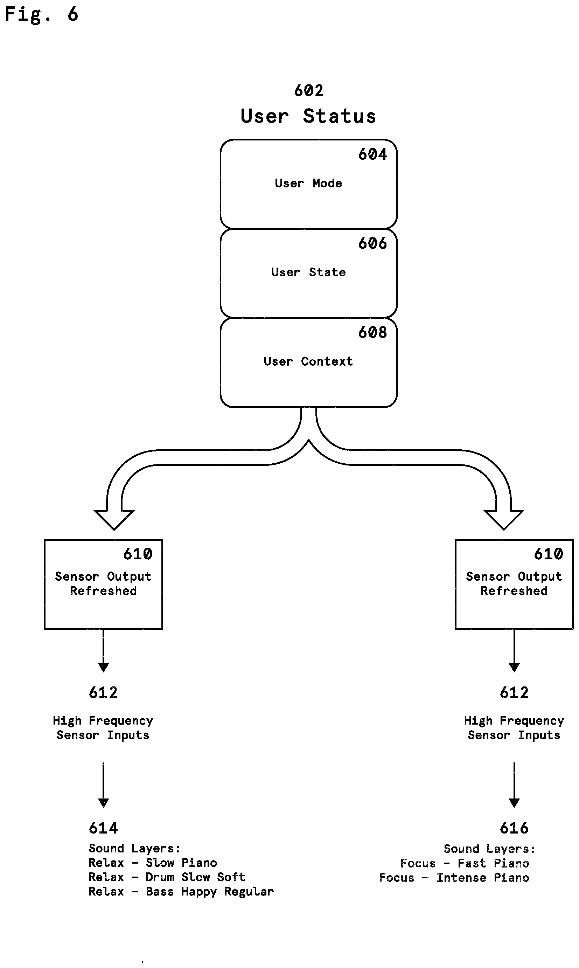

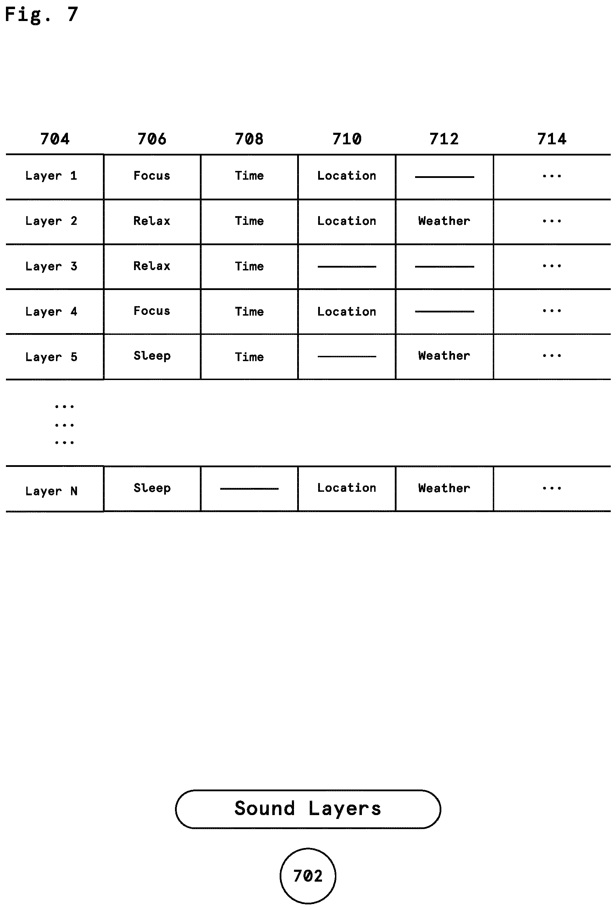

Each of the note sequences and notes from steps 212-216 can be viewed as a layer of sounds which form the sound section, with one or more layers being presented to the user. Additional layers are available by applying the note sequences and notes from steps 212-216 to the selected instruments of step 218. At step 220, and also referring to FIGS. 6 and 7, particular sound layers 704 are selected and combined by a real time mixer 410 for presenting sounds to the user. The particular layers are selected based on a set of rules guiding the selection such that, as discussed above, the particular selected notes and instruments are appropriate for the determined user mode, state, user context, or user preferences and profile. Layers are also selected such that the layers of the combined output do not clash with each other in terms of tempo and intensity. The selected layers are sequenced together at step 222 for presentation to the user on the user device 114.

At step 224, the combined layers of sounds 520 are presented to the user for listening by the user. The system can also determine the volume by which the sounds are to be presented to the user. The user device 114 can include a microphone to detect a single sound, a combination of sounds, a combination of sounds and music, and a combination including human speech. For example, the microphone can be utilized to measure sound levels in the user's space and react to sudden volume changes, either raising or lowering the sounds volume to permit continued listening by the user. A detection of a new human voice can trigger a reduction in the sounds volume to permit the user to conduct a conversation without being distracted by the presented sounds.

Changes in user state, user environment and user mode underly shifts between phases. At step 226, the system dynamically determines that information received from one or more sensors has changed and warrants a change in the sounds being transmitted for presentation to the user. For example, the location of the user has changed, and the GPS data shows the user driving from her gym to her home. Accordingly, the system changes the sounds to be more focused and relaxed, to address the attention the user needs for traffic and for preparing for a relaxed time at home after working out. Steps 210-226 are performed automatically, without human input, based at least on the determined user state and context.

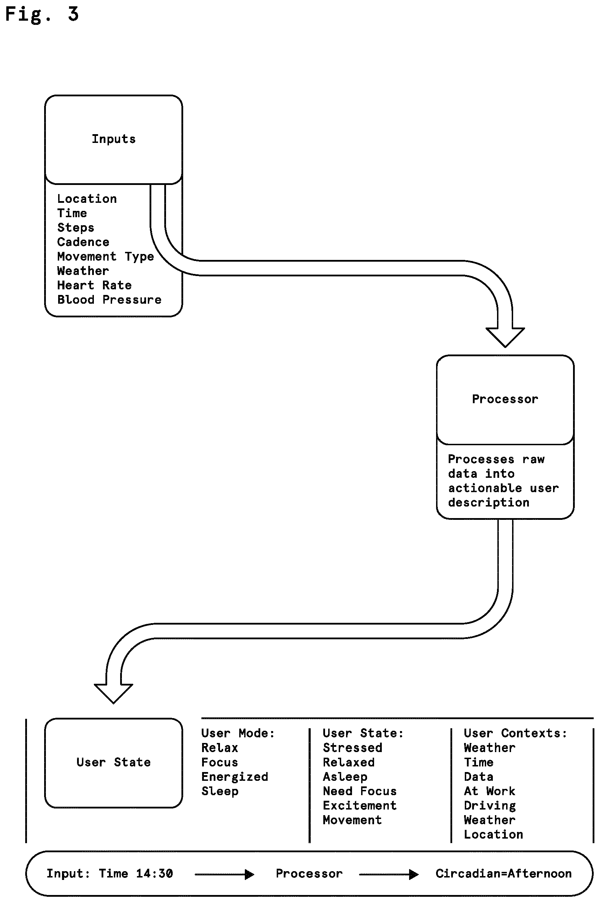

The aforementioned system and methods described above with respect to FIGS. 1-7 provide a layered approach to generating a soundscape particular to a user mode, user state, and user context. These particular soundscapes comprise sound phases. When a user mode, a user state and/or a user context changes, then the sound engine may shift the generated soundscape into a new or different phase. These phases may then be sequenced together to create a more adaptive, larger soundscape of indefinite length.

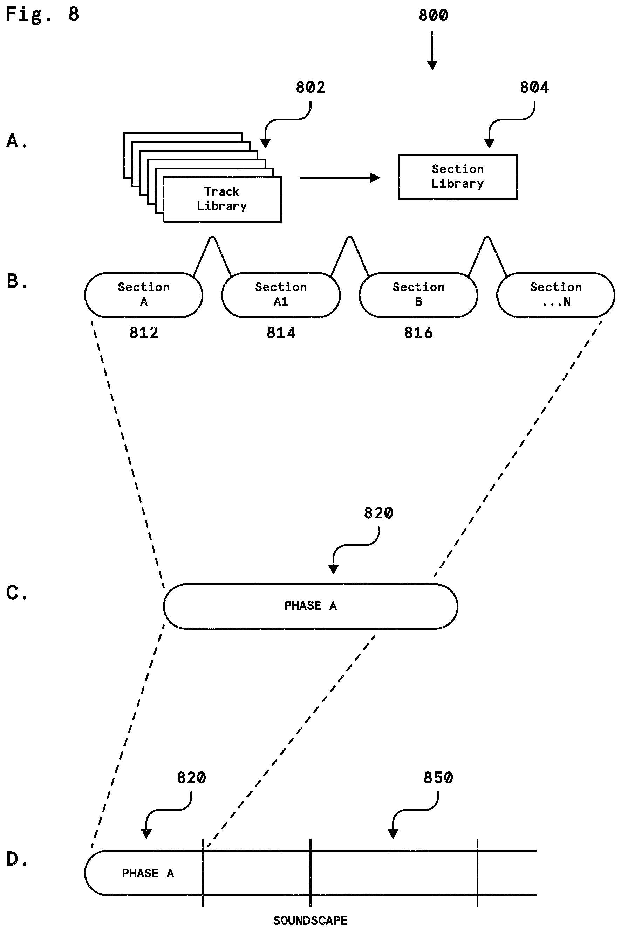

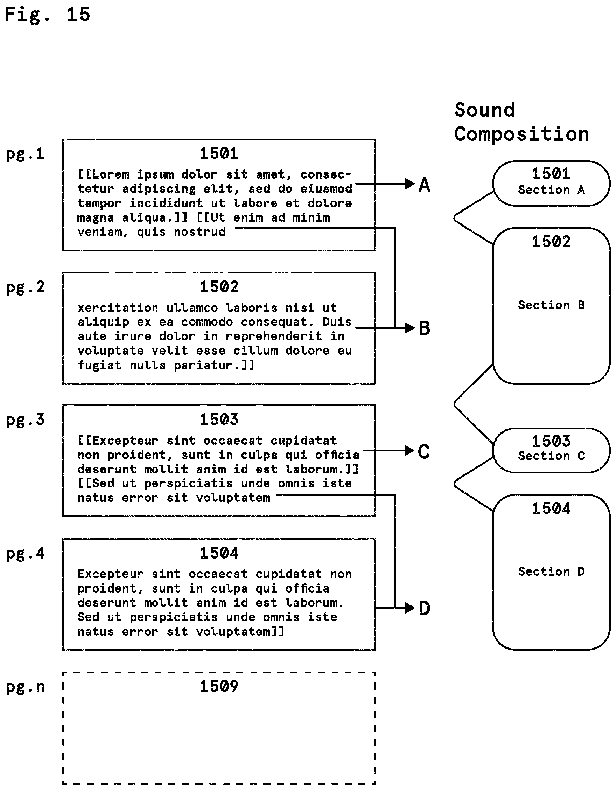

FIG. 8 is an example diagram 800 depicting the generation of a continuous music soundscape according to one or more aspects of the present disclosure. For example, in some cases, the diagram 800 can depict the generation of a continuous music soundscape using the granular approach(es) of automatic composition described above. In some embodiments, the diagram 800 can depict the generation of a continuous (e.g., dynamic) music soundscape using one or more aspects of the text-based automatic composition described in greater depth below (e.g., with reference to FIGS. 15-17). In one illustrative example, one or more tracks of sound (e.g., from one or more track libraries such 802) can be layered on to one another in order to create one or more sound sections, shown here as sound sections 812-818. In some embodiments, one or more of the sound sections 812-818 can be generated as described above with respect to FIGS. 2-7 and/or as described below with respect to FIGS. 15-17. As illustrated, a section library 804 can additionally be provided, wherein section library 804 can be configured to store or otherwise provide one or more sound sections, including the sound sections 812-818.

Returning to FIG. 8, in some examples the same track library 802 (and/or the same section library 804) can be used to generate a plurality of sound sections 812, 814, 816, and 818, depicted as Section A, Section A1, Section B, ..., Section N, respectively. In some embodiments, one or more of the plurality of sound sections 812-818 can contain a multiple of 16 beats and/or can be generally on the order of seconds in length.

One or more of the generated sound sections can subsequently be pieced together or otherwise combined to form one or more sound phases. For example, the generated sound sections 812-818 can be used to generate a sound phase 820, shown here as Phase A. In some embodiments, the generated sound phases can be on the order of minutes to hours in length, depending, for example, upon factors such as the change in phase condition. In turn, one or more of the generated sound phases may then be sequenced together into a soundscape 850, which may be on the order of several minutes to several hours in length or duration. For example, soundscape 850 includes the generated sound phase 820 and one or more additional generated sound phases (not shown). In some examples, the modularity of sound sections (such as sound sections 812-818) and sound phases (such as sound phase 820) can be used to improve the automatic composition and/or generation of a continuous soundscape (such as soundscape 850), as disclosed herein.

Sound sections (also referred to as "sections") have the smallest length or duration, e.g., the duration or runtime of a sound section (such as sound sections 812-818) is less than or equal to that of a sound phase (such as sound phase 820), which itself has a duration or runtime that is less than or equal to that of a soundscape (such as soundscape 850). Sound sections can be utilized to enable variability within a sound phase (also referred to as "phases"). For example, a sound engine can choose different rhythms, melodies, and/or patterns within sound sections in order to create a high intensity sound phase. Likewise, sound sections can enable reactivity and dynamism in the generated sounds and/or sound compositions, where different ones of the plurality of sound sections may be chosen or otherwise generated based on factors such as sensor input. In some embodiments, sensor input(s) can include, but are not limited to, measurements such as heart rate, breath rate, cadence, weather, time, etc. In some examples, sound phases can be used to further control the evolution and progress of or within a soundscape (such as soundscape 850) that is generated by the automatic composition systems and techniques described herein. In some embodiments, sound sections (such as the sound sections 812-818 and/or sound sections stored in track library 802 and/or section library 804) can be used as a basic, modular component of the automatic composition systems and techniques that are described herein.

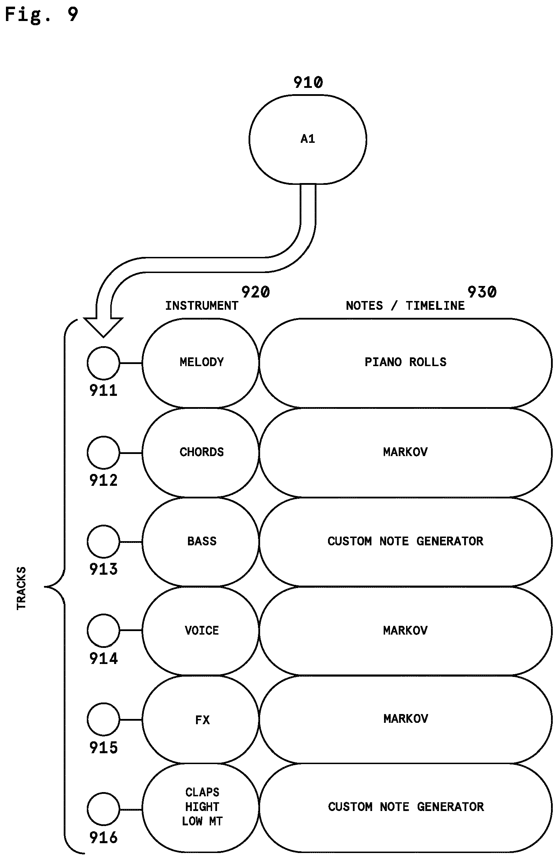

For example, FIG. 9 illustrates a sound section 910 (labeled as Section A1) comprising a plurality of tracks 911-916. In some embodiments, sound section 910 can be the same as or similar to the sound section 814 depicted in FIG. 8 and described above. Sound section 910 is shown as including six layered tracks 911-916, each associated with a type of instrument 920 and a type of timeline 930. However, it is noted that a greater or lesser number of layered tracks can also be utilized to generate sound section 910 without departing from the scope of the claims. Additionally, it is appreciated that the constituent tracks and/or track types of sound section 910 can be different than the example track types 920,930 that are shown in the example of FIG. 9. Here, each of the track layers 911-916 comprises a different instrument 920 with respective notes/timelines 930. In some embodiments, the layered approach of FIG. 9 can be utilized to combine tracks that are composed using different generative techniques, as is described in greater depth below. Different types of generation (e.g., of constituent tracks of a sound section, of a note sequence, etc.) can be chosen or otherwise utilized based on factors such as an identified/determined soundscape genre, an intensity parameter, and/or a common musical appropriateness. For example, as will be explained in greater depth below, a musical appropriateness can be determined specific to or particular to a given user of the presently disclosed systems and techniques for automatic soundscape generation. In one illustrative example, musical appropriateness can be based at least in part on a user profile and/or one or more user preferences, indicating sound types (e.g., notes, rhythms, tempos, instruments, tracks, sections, phases, etc.) that are identified and/or determined to be appropriate (or non-appropriate) for the given user. In some embodiments, the user profile/user preferences can be provided at least in part as one or more user inputs, for example received via a setup wizard and/or one or more UI elements/prompts presented to a user. In some embodiments, the user profile/user preferences can be determined automatically by the presently disclosed systems and techniques, for example using one or more user inputs that can be analyzed to determine or infer at least a portion of the user profile/user preferences. As will be described in greater depth below, the user inputs that can be analyzed or otherwise used to infer user preferences and/or musical appropriateness can include (but are not limited to) user inputs to skip soundscapes generated in a shuffle or random mode; user inputs to a like and/or dislike button for presented soundscapes; user responses, skips, likes/dislikes, etc., provided in response to A-B testing and/or comparative testing using soundscapes generated to test user preferences or musical appropriateness, etc.

In some embodiments, one or more of the identified or determined soundscape genre and/or the intensity parameter can be user-specific, in a manner that is the same as or similar to as described above with respect to the musical appropriateness determination. For example, as will also be explained in greater depth below, soundscape generation can be based at least in part on one or more determinations of particular soundscape genres that are determined to be appropriate for a specific user, or are determined to otherwise be sufficiently aligned with the specific user's preferences (e.g., preferences inputted by the specific user or preferences automatically determined for the specific user).

In some cases, soundscape generation can be based at least in part on one or more determined intensity parameters that correspond to a specific user. For example, a specific user might have a musical/sound preference for low intensity, high intensity, a combination of the two, etc. In some embodiments, the one or more determined intensity parameters can be specific to particular combinations of other factors. For instance, it may be determined that the specific user preference is for low intensity sounds in a first set of soundscape genres and high intensity sounds in a second set of soundscape genres. In some embodiments, the systems and techniques described herein can automatically determine, modify, update, or otherwise adjust one or more user preferences in a multivariate manner (e.g., automatically determine user preference(s) for various soundscape genres, and further determine user preference(s) for intensity parameters and/or musical appropriateness within each of the determined soundscape genres)

Returning now to the discussion of FIG. 9, as illustrated for sound section A1 (910), Track 1 (911) is a melody with piano rolls, comprising individual notes played in succession. Track 2 (912) is composed of chords, a group of notes sounded together with or based on a Markov timeline, e.g., determined using a Markov process. Track 4 (914), comprising voice notes, and Track 5 (915), comprising FX (e.g., sound effect) notes, are both additionally shown as having timelines 930 that are determined by a Markov process. Track 3 (913) is composed of bass notes, e.g., a group of bass notes sounded together in a sequence or arrangement that is determined using a custom note generator, according to aspects of the present disclosure. In some examples, a custom note generator according to aspects of the present disclosure can include, be based on, or otherwise implement a stochastic approach, among others. For instance, in some examples, tracks having a stochastic timeline can be those tracks whose note sequences are generated by a stochastic process other than a Markov process.

A Markov timeline is a stochastic model describing a sequence of possible events in which the probability of each event depends only on the state attained in the previous event. In some examples, rules can be defined by which notes can be played after each particular note. In some embodiments, one or more rules indicating permissible pairs of successive note pairs (or permissible note sequences of three or more notes) can be determined based at least in part on an automatic determination of user preferences. In one illustrative example, the permissible pairs or sequences of notes can be determined for a specific user, based on analyzing user feedback and/or user input(s) obtained from the specific user. For example, the permissible pairs or sequences of notes can be included in the automatic determination of musical appropriateness previously described above.

In some embodiments, the systems and techniques described herein for automatic soundscape generation can determine these rules (and/or the permissible pairs and sequences of individual notes) using a learning or evolving adaptation process that is automatically performed for specific users. In the context of combinatorial note rules and/or permissible note pairs and note sequences, the automatic learning or evolving adaptation process can be based at least in part on analyzing a plurality of user inputs that are provided by the specific user in response to the presentation of various automatically generated soundscapes.

For example, if a user presses a 'skip' or 'next' button partway through the presentation of an automatically generated soundscape, it may be inferred that one or more aspects in the skipped soundscape are unpleasant to the user or otherwise do not correspond to the specific user's sound preferences. In some embodiments, the systems and techniques described herein can include one or more user interface elements that allow a user to provide specific feedback indicating a like or dislike of a currently presented automatically generated soundscape. In such a scenario, an automatically generated soundscape that is currently being presented to the user can be skipped in response to receiving a 'dislike' user input.

In general, a single user input (e.g., a 'like,' a 'dislike,' or a skip) received in association with an automatically generated soundscape may not be sufficient to determine or infer specific user preferences. For example, a user might skip a soundscape by accident, in which case it can be improper to use the skipped soundscape to determine or infer the user's preferences. A user might also skip a soundscape arbitrarily, or because the user is not in the mood to listen to the soundscape - again, it can be improper to use the skipped soundscape to determine or infer the user's preferences in these cases. In some examples, a user might intentionally skip or 'dislike' an automatically generated soundscape because the soundscape contains multiple different auditory elements that are not aligned with the user's preferences - in this case, it would be proper to determine or infer the user's preferences from the provided user feedback. However, a single skip, 'dislike,' 'like,' or other instance of user feedback associated with an automatically generated soundscape provides a single point - from which it can be difficult to identify the specific auditory elements (e.g., out of the set of all auditory elements present in the soundscape) that triggered the user feedback and/or that should be used to determine or update the user's preferences.

Accordingly, in one illustrative example, the systems and techniques described herein can automatically collect and compile a plurality of user preference and/or user feedback data points and use the aggregate set to automatically determine or otherwise update a specific user's soundscape generation and/or auditory preferences. For example, by analyzing the aggregate set of user feedback information obtained for a specific user, the systems and techniques described herein can more accurately determine or otherwise infer user preferences and other trend information to better guide the automatic generation of soundscapes particular to that specific user, as will be explained in greater depth below.

The collected user preference and user feedback data points can include, but are not limited to, the previously described user inputs of a 'like,' 'dislike,' or skip of an automatically generated soundscape that was presented to the user. In some embodiments, the collected user preference and feedback data points can be associated with an identifier of the corresponding soundscape to which they pertain. Additionally, or alternatively, the collected user preference and feedback data points can be associated with one or more tags or features included in the corresponding soundscape.

For example, user feedback comprising a 'dislike' or a skip of a soundscape can be stored in combination with or otherwise associated with a list or a set of features that were included in the soundscape. The features can have various granularity levels, such that a feature can be associated with a constituent note, track, section, and/or phase of the soundscape. In some embodiments, one or more features can have a granularity that associates the feature(s) with the overall soundscape as a whole. The features can include an identification or categorization of the constituent notes, tracks, sections, and/or phases of the soundscape. In some embodiments, the features can specify a sequence order of some or all of the constituent notes, tracks, sections, and/or phases of the soundscape. The features can also indicate or specify one or more types of instruments, melodies, chords, sound effects, intensities, etc., that are present within the soundscape or are otherwise associated with one or more constituent components of the soundscape (e.g., notes, tracks, sections, and/or phases).

In some embodiments, one or more of the features or tags can be pre-determined, e.g., stored in association with the sound element (e.g., note, track, section, phase, etc.) to which the feature or tag is applied. One or more of the features or tags can additionally, or alternatively, be automatically generated by the systems and techniques described herein.

As contemplated herein, sound features can be used in combination with various forms of user feedback and/or user preference information to drive a learning or evolving adaptation process that is automatically performed for specific users. For example, an aggregate set of user feedback received from a specific user can be analyzed to identify one or more common sound features across the aggregate set, and a determination can be made correlating an identified common sound feature to one or more user sound preferences (and/or can be used to adjust one or more user sound preferences). For example, if 95% of the soundscapes disliked or skipped by a user contain nature sounds, it can be determined with a relatively high confidence level that the user's sound preferences do not (or should not) include nature sounds.

In one illustrative example, negative user preferences (e.g., disliking nature sounds) can be cross-referenced and analyzed against affirmative user preferences, and vice versa. For example, continuing in the example above in which 95% of the soundscapes disliked or skipped by a user contain nature sounds, the confidence level of the determination that the user's sound preferences do not include nature sounds can be increased even further by analyzing the user's 'liked' soundscapes for the absence of nature sounds. If none (or a relatively small percentage) of the user's liked soundscapes contain nature sounds, it can be determined at an even higher confidence level that the user's sound preferences do not (or should not) include nature sounds.

In this manner, the systems and techniques described herein can automatically determine affirmative and negative user sound preferences (and use the determined sound preferences to drive a learning or evolving adaptation process for generating soundscapes for that user). For example, affirmative user sound preferences (e.g., sound features that the user enjoys/are appropriate for inclusion in automatic soundscapes generated for the user) can be determined from the presence of certain sound features in 'liked' soundscapes and/or from the absence of certain sound features in 'disliked' or 'skip' soundscapes. Negative user sound preferences (e.g., sound features that the user does not enjoy/are not appropriate for inclusion in automatic soundscapes generated for the user) can be determined from the presence of certain sound features in 'disliked' or 'skip' soundscapes and/or from the absence of certain sound features in 'liked' soundscapes.

In some embodiments, the greater the commonality of an identified sound feature within the set, the greater the confidence level that may be associated with a user preference determination made with respect to the identified sound feature. For example, the aggregate set of user feedback can be sub-divided based on the type of user feedback represented (e.g., the aggregate set can be divided into a subset comprising 'dislike' user feedback data points, a subset comprising 'like' user feedback data points, a subset comprising 'skip' user feedback data points, a subset comprising 'dislike' and 'skip' user feedback data points, etc.).

Confidence levels can be represented as weights or probabilities associated with sound features. For example, if the sound feature is a particular melody, rhythm, or instrument, a user preference for the sound feature can be determined with some confidence level (e.g., as described above). The confidence level can be a probability that the sound feature will be included in an automatically generated soundscape. For example, if it is determined at a 90% confidence level that a user has an affirmative preference for piano notes, then the systems and techniques described herein can generate automatic soundscapes for that user with an approximately 90% probability that piano notes are included in any given automatically generated soundscape. In another example, if it is determined at a 90% confidence level that a user has a negative preference for trumpet notes, then the systems and techniques described herein can generate automatic soundscapes for the user with an approximately 90% chance that trumpet notes are not included (conversely, with a 10% chance that trumpet notes are included).

It is noted that while, in some embodiments, confidence levels may be used as an approximately direct representation of the weight/probability assigned to a sound feature, it is also contemplated that confidence levels can be used as one of multiple inputs to a calculation of an ultimate weight/probability assigned to a sound feature. In other words, a 90% confidence level that a user has an affirmative preference for piano notes may not always translate to a 90% probability that piano notes are included, and for example could instead translate to a 70% probability that piano notes are included. However, the same general trend can be observed regardless of whether confidence levels are directly or indirectly translated into sound feature weights/probabilities, e.g., a 90% confidence level will result in a higher final weight/probability than a 40% confidence level.

In one illustrative example, the determined user preferences for sound features (and the associated confidence levels) can be used to dynamically update or otherwise change an existing weight/probability assigned to a sound feature, as mentioned above. In this manner, the systems and techniques described herein can use the determined sound preferences to drive a learning or evolving adaptation process for automatically generating soundscapes for specific users. Accordingly, in some embodiments, a plurality of sound features can be associated with an initial starting weight/probability of inclusion in an automatically generated soundscape. The initial or starting weights can be uniform (e.g., all sound features have an equal probability of inclusion). In some cases, the initial or starting weights can be non-uniform (e.g., some sound features have a higher probability of inclusion than others, and vice versa).

In some embodiments, at least a portion of the initial or starting weights assigned to the sound features can be determined using feedback and/or preference information that was previously collected or determined for other users. For example, the initial starting weights assigned to the sound features can be determined as the average sound feature weights as calculated over an entire user base of the presently disclosed systems and techniques for automatic generation of personalized soundscapes. In some embodiments, the initial starting weights can be calculated as the average sound feature weights over some subset of users. For example, the subset of users can include, but is not limited to: users with similar demographic information to the current/specific user (e.g., age, sex, gender, location, profession or occupation, etc.); users located in the same geographic area as the current/specific user (e.g., country, state/region, city, town, etc.); users with the same or similar computing device or computing device information as the current/specific user; etc.

By analyzing information of or associated with the current/specific user to identify a subset of other similar users that share the same attribute(s), in some embodiments a more accurate set of initial sound feature preference weights can be determined and configured for the current/specific user (e.g., by taking the average sound feature preference weights over the subset of identified similar users). In some embodiments, one or more sets of initial sound feature preference weights can be pre-determined and associated with relevant demographic information and/or other user attributes that are associated with or otherwise represented by a given one of the pre-determined sets of pre-determined sound feature preference weights. In some scenarios, no demographic or other user attribute information may be available, in which case a pre-determined or default set of initial sound feature preference weights can still be utilized. The default set of initial sound feature preference weights can include one or more non-uniform weights.

As described above, user feedback information can be obtained via one or more user interface elements such as a 'like,' 'dislike,' and/or 'skip' chosen by a user in the normal course of operation (e.g., during the normal presentation of soundscapes). In some embodiments, user feedback information can additionally (or alternatively) be collected in response to a shuffle mode in which randomized (or partially randomized) soundscapes are automatically generated and presented to the user. The soundscapes generated during the shuffle/randomized mode can exhibit a greater variance of sound features that are included, and therefore, in some cases can be used to obtain user feedback data points that permit a more accurate and/or efficient determination and characterization of the user's sound feature preferences. For instance, in a 'normal' mode (or other mode that is not the shuffle mode), automatic soundscape generation may be more tightly constrained to produce soundscapes that are known to be perceived as pleasant or preferred by a specific user. For example, in a 'sleep' mode, the systems and techniques described herein may be configured to generate sleep soundscapes using known user preferences, such that sound features that are known to be preferred by the user are disproportionately emphasized (e.g., have a greater weight and higher probability of inclusion) while sound features that are known to be non-preferred by the user are disproportionately de-emphasized (e.g., have a lower weight and lower probability of inclusion).

In other words, in some embodiments the various 'normal' modes of the automatic soundscape generation described herein can be expected to produce soundscapes that the user will 'like' in a substantial majority of instances, which can make it difficult to accurately and efficiently characterize or update the user's sound preferences (e.g., because the user is unlikely to be presented with any sound features that were previously identified as disfavored, and/or is unlikely to be presented with any sound features for which user-specific preference information is unavailable or has not been determined). Accordingly, the use of a shuffle or randomization mode can explore user preferences and collect feedback regarding various sound features (and combinations thereof) that may not typically be presented in the soundscapes generated for a specific user. As mentioned previously, this can be beneficial for determining user preferences for sound features that do not yet have any user-specific preference information (e.g., because the sound feature has never or rarely been presented to the user).

The use of a shuffle or randomization mode can additionally be beneficial for determining whether (and to what extent) user preferences may have changed or evolved over time. For example, a user may have previously expressed a strong dislike (e.g., negative preference) for nature sounds in their soundscapes, which would cause nature sounds to be entirely (or almost entirely) omitted from the soundscapes generated for that specific user. In some cases, the resulting negative preference for nature sounds may prove inaccurate (or less accurate) with the continual passage of time - several months or a year later, the user's preferences may have changed to the point that he or she now actively enjoys or prefers nature sounds. However, because the user previously indicated a strong dislike or negative preference for nature sounds, the soundscape generator described herein would have ceased to include nature sounds in the soundscapes generated for that user, thereby eliminating any opportunities (in the course of normal operation) to present the user with nature sounds and receive a 'like' or other positive feedback that would allow the system to determine that the user's preference for nature sounds is shifting from negative to positive.

Accordingly, in some embodiments, the shuffle or randomization mode contemplated herein can generate shuffled/randomized soundscapes that prioritize or otherwise emphasize the inclusion of sound features for which no user-specific preference information has yet been determined and/or sound features for which the user had previously expressed a negative preference. In some cases, a pre-determined time interval can be configured to specify a minimum amount of elapsed time before a sound feature for which a negative user preference was determined will be included in a shuffled/randomized soundscape (e.g., 6 months or one year).

The process of collecting and analyzing user feedback information to determine or update user preferences based on the shuffled/randomized soundscapes can then proceed in a same or similar manner as was described previously above. In some embodiments, confirmatory user preference information determined from shuffled/randomized soundscapes can be given an even greater weight. For example, consider a scenario in which the soundscape generator described herein had previously (e.g., in the normal course of operation) determined that the user holds a negative preference for nature sounds, and later (e.g., after 6 months or some other pre-determined 'cool-down' period) presents the user with a shuffled/randomized soundscape that includes multiple nature sounds or nature sound features. If the user once again provides feedback indicating a negative preference for nature sounds (e.g., selection of a 'dislike' or 'skip' UI option), this can comprise confirmatory user preference information that is given an even stronger weight when updating the user's sound feature preferences. In other words, if it is initially determined that the user dislikes nature sounds in their soundscapes, and it is then later confirmed that the user still dislikes nature sounds in their soundscapes, then nature sounds can be given a near-zero weight (e.g., probability of inclusion) or can be removed entirely from the soundscapes generated for that user in the future.

In some embodiments, shuffle mode can be activated in response to a user input or user selection of a shuffle mode option. In some cases, the systems and techniques described herein can automatically prompt a user to engage shuffle mode, e.g., if it is determined that the user has not recently used shuffle mode and/or that an insufficient amount of user feedback information has been collected recently.

In some embodiments, an A-B testing mode can be provided by the systems and techniques described herein, in which a first soundscape (referred to as 'Option A') and a second soundscape (referred to as 'Option B') are generated in combination and successively presented to the user in order to obtain user feedback information for each of the two options. In some cases, the A-B testing mode can be provided in addition to, or alternative to, the shuffle mode described above. In some instances, the A-B testing mode described below can be integrated into the shuffle mode, either wholly or partially. In general, the A-B testing mode can generate the two soundscapes Option A and Option B in a controlled manner, such that they are the same or similar across many dimensions of sound features but differ along one or more sound feature dimensions of interest. By collecting and comparing user feedback provided for Option A and Option B, the system can determine or infer one or more user preferences with respect to the sound feature dimension(s) of interest. For example, Option A can both be a relaxing sleep soundscape, with the same melodies and rhythms, but Option A includes soft percussion instruments and Option B includes soft wind instruments. By controlling the dimensions of sound features included in Option A and Option B other than one choice of instrument (e.g., the soft percussion instruments v. the soft wind instruments), the comparative analysis of the user feedback received for Option A and Option B when presented in the A-B testing mode can be used to determine a user preference, either affirmative or negative, for both the soft percussion instruments and the soft wind instruments.

For instance, after being presented both the Option A soundscape and the Option B soundscape, the user can be prompted to provide feedback indicating which of the two options the user preferred. In some embodiments, the user can be prompted to provide feedback indicating a preference level or preference strength for each of the two options (e.g., on. 1-10 scale, or a strong dislike to strong like scale, etc.). The comparative analysis of the user feedback on the A-B testing soundscape options can be used to determine or otherwise update a relative preference distance between the sound feature dimension(s) that are the focus/object of interest of the A-B test, and the user preferences for the tested sound features can be updated based on the determined relative preference distance. In other words, the A-B testing in some cases might not be used to determine absolute user preference values for sound features but can be used to refine or adjust the relative preference distance between sound features.

For instance, if in the example above the user indicated that they prefer Option A (with soft percussion instruments) over Option B (with soft wind instruments), then a relative amount of separation (e.g., a preference separation distance) can be determined between the user's preference for a percussion instrument sound feature and the user's preference for a wind instrument sound feature. The absolute preference values for percussion and wind instruments can then be updated based on this determination of the relative amount of preference separation. In one example, a value of the preferred sound feature (e.g., percussion instruments) can be increased by an amount based on the relative preference separation, while the non-preferred sound feature (e.g., wind instruments) is kept the same. In some examples, the value of the preferred sound feature (e.g., percussion instruments) can be kept the same while the value of the non-preferred sound feature (e.g., wind instruments) is decreased by an amount based on the relative preference separation. In another example, the value of the preferred sound feature (e.g., percussion instruments) can be increased by a first amount while the value of the non-preferred sound feature (e.g., wind instruments) is decreased by a second amount, wherein the first and second amounts are determined based on the relative preference separation between the preferred and non-preferred sound features.

The above example is presented for purposes of illustration. In some embodiments, it is contemplated that A-B testing can be conducted in multiple instances, to obtain an aggregate set comprising multiple user feedback data points from the A-B testing, such that the aggregate A-B testing user feedback data points can be analyzed to determine user preference information in much the same or similar manner as has been described previously above. In some embodiments, A-B testing can be conducted over multiple sessions or instances to increase the accuracy and reliability of user preference determinations and/or inferences made based on the resulting user feedback data from the A-B testing - by conducting multiple A-B tests over time, this can provide the user with the option to change his or her mind and/or can otherwise account for normal/expected variations in user mood, preferences, responses, etc. In other words, conducting multiple rounds of A-B testing over time can result in an aggregate set of user feedback data points that provide a more statistically relevant or representative characterization of the user's sound preference features.

The succession of notes, chords, etc. are ultimately determined then by these rule sets and randomness in order to create a unique composition. In some embodiments, a Markov timeline can be a generative sequence of notes that is created with a Markov chain and a probability matrix. The probability matrix and/or the note transition rules can, in some cases, be pre-determined according to preference. In some embodiments, the Markov probability matrix and/or rules can be automatically generated and updated by a learning and evolving system, wherein reference sets of notes are provided as a learning (e.g., training) data input. Based on the reference sets of notes, the learned Markov generation system can produce new and similar note sequences for use in automatically composed soundscapes of the present disclosure. In some examples, re-training or re-learning can be performed on a periodic basis, e.g., to either better adapt to the personal preferences of a particular user and/or to match the evolution of a user's preferences over time. In some cases, a small degree of randomization can be injected into the sound generation and composition process on a session-by-session basis.

In an illustrative example, the "Custom Note Generator" timeline type (e.g., the type of timeline 930 associated with layered track 3 (913)) can be applied to tracks that are generated using one or more of the processes of the present disclosure, for example tracks that are generated via the sound and note generator 404 described previously with respect to FIG. 4. In some embodiments, a stochastic method can be used in which notes, special effects, percussion, etc. are chosen at random.

The sound system described herein is dynamic in that it continues to receive sensor data and user input to automatically adjust the sounds presented to the user (and/or to adjust control signals transmitted) as the sensor data and/or user input change. In some embodiments, the system can continuously receive output from the sensors, store the sensor output, and compare the recently received sensor output against prior stored sensor output, sensor by sensor. If the output for a particular sensor has changed significantly for that particular sensor, the system can compare the degree and direction of change against its rules. In one illustrative example, the system can compare the change against the user's profile and preferences.

If the sensor output has changed to the extent to warrant changes to the sounds and/or soundscape to be presented to the user, the system can update its output and transmit modified sounds and/or soundscape. For example, if the system determines from one or more sensor outputs that the user's heartrate is increasing while the user remains stationary, this can suggest the user is becoming more stressed, and the system may automatically begin composing and presenting more relaxing sounds. Similarly, the user's GPS signals indicating the user is no longer driving and has arrived at home or at a gym can be taken to suggest that relaxing sounds be presented (relaxing at home) or that energizing sounds be presented (working out at the gym).

In some embodiments, different confidence levels can be associated with the correlation between a certain parameter or sensor input/sensed value and a corresponding user state. For example, an increased user heart rate, viewed in isolation, may be considered a low confidence indicator, as it could potentially be correlated with multiple different user states (e.g., an increased heart rate could correlate with stress, but an increased heart rate could also correlate with excitement, happiness, exercising, fright, etc.). In some embodiments, one or more of the different confidence levels can be the same as or similar to the confidence levels previously described above with respect to the automatic determination and/or updating of user sound feature preferences.

Accordingly, in some embodiments multiple parameters and/or sensor inputs can be used in combination to achieve a higher confidence level determination, e.g., sufficient to infer or estimate a user state that will trigger the automatic soundscape composer system to react or otherwise modify the current sound generation approach. Pairs or sets of parameters used to obtain a higher confidence level determination of a correlated user state can, in some examples, be pre-defined and/or can be learned and evolve with time. In some examples, input data from the one or more sensors can be analyzed or pre-processed to make an initial determination of the reliability of the input data - input data determined to be of low reliability can trigger the application of a stricter confidence level standard, e.g., requiring an increased number of sensor inputs (in comparison to a baseline number) to indicate the same correlation before a change in user state can be inferred.

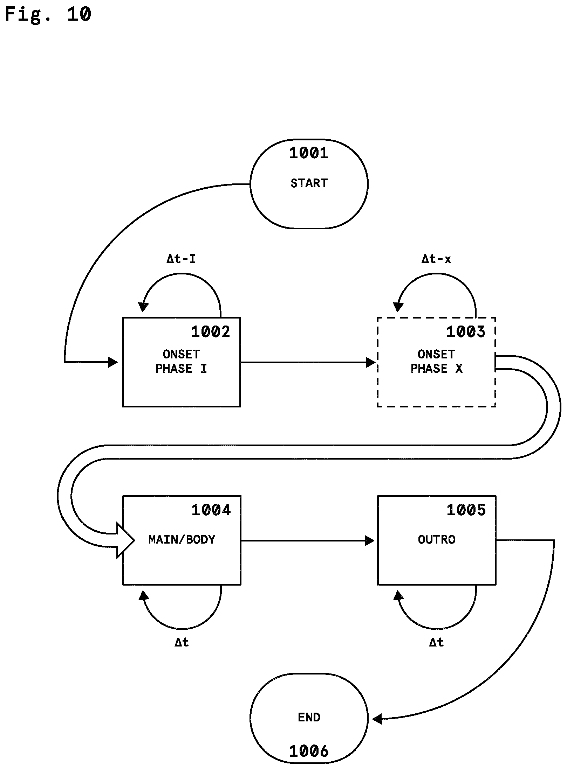

FIG. 10 illustrates an example construction of a soundscape comprising a plurality of sound phases sequenced together with varying characteristics. In particular, FIG. 10 depicts an example construction 1000 (also referred to as a "template" or "soundscape template") of a sleep soundscape, e.g., which might be utilized by a user who is going to sleep. In some examples, the sleep soundscape can be generated and provided to the user automatically by the systems and techniques described herein. For example, the sleep soundscape can be generated and provided based on an automatic determination made based at least in part on one or more sensor inputs. In some examples, the sleep soundscape can be generated and provided to the user based on a pre-determined start time, a user routine, a user-defined trigger, a user input, etc. As illustrated, the example sleep soundscape construction of FIG. 10 includes a linear progression of phases, e.g., without branching paths or options in which a choice is made between two or more subsequent phases when transitioning out of the current phase. In some embodiments, sleep soundscape constructions (and/or various other soundscape constructions contemplated herein) can utilize a non-linear progression of phases, or a combination or linear and non-linear phase progressions.

In some embodiments, soundscape construction can begin based on an initial template that defines one or more phases, e.g., the example template/high-level construction of FIG. 10. The phases can be defined by the template in a detailed or complete manner (e.g., specifying particular contents or components to include in given phases). In some embodiments, the phases can be defined by the template at only a high level, e.g., by specifying the purpose of the phase or type of the phase, which the soundscape construction system described herein can then use as an input to automatically generate the appropriate phases itself, without any further reliance on the soundscape template. In some examples, a soundscape construction template can include one or more rules within each phase, to further control the operation of the soundscape generator over a set of available audio inputs or building blocks (e.g., provided by or obtained from track libraries such as track library 802 of FIG. 8, section libraries such as section library 804 of FIG. 8, etc.).

The one or more rules (and/or the constituent phases themselves that are contained within the template) can, in some cases, depend on one or more sensor inputs. For example, the template can specify a subset of sensor inputs (e.g., a subset of all available sensor inputs) that should be used. In one illustrative example, the template can specify one or more different weightings or prioritizations that should be applied. For instance, the template can specify different weights or weighting factors that are to be applied to specific sensor inputs when generating a given phase(s) of the overall soundscape associated with the template. In some embodiments, one or more of the phase rules can operate on inputs received from a randomization process, e.g., instead of operating on sensor inputs or in addition to operating on sensor inputs.

For instance, as illustrated in FIG. 10, a soundscape may start 1001 with a first intro/onset phase 1002, which in some embodiments can be followed by one or more subsequent intro/onset phases 1003. The intro/onset phase(s) 1002, 1003 can be sections with reduced complexity (i.e., sections with fewer sound layers). One or more of these phases may be repeated for a duration *Δt* until the main body 1004 of the soundscape is reached. For example, the first onset phase 1002 can have a duration *I* and can be repeated *Δt*/*I* times before the soundscape proceeds to the subsequent onset phase(s) 1003. Similarly, the subsequent onset phase(s) 1003 can have a duration *X* and can be repeated *Δt*/*X* times before the soundscape proceeds to or otherwise reaches the next phase (e.g., the main body 1404 of the soundscape).

The main body 1004 can include a phase that is more structured. For example, the main body phase 1004 can include or comprise one or more sections having, for instance, faster tempos, more complex layers, and/or a more pronounced response to sensor input(s). Sound sections that have a more pronounced response to sensor input can have a faster response time and/or a larger response magnitude to the sensor input.

As illustrated, main body phase 1004 is then followed by an outro phase 1005 of length *Δt.* In some examples, outro phase 1005 can include less layered complexity in one or more of its constituent sound sections and/or can include more fade out characteristics, to end 1006 the soundscape. In some cases, outro phase 1005 can be similar (or otherwise generated using similar soundscape construction rules) to one or more of the intro phases 1002, 1003.

In some embodiments, one or more rules and/or selection triggers can be used to select the constituent sound section elements for inclusion in the currently played/generated phase (e.g., one or more, or all, of the sound section elements included in the phases of a soundscape, such as the phases 1002-1005 of the example soundscape of FIG. 10).

As mentioned previously, in some cases the rules and/or selection triggers can initially be pre-defined in the soundscape construction template (e.g., such as the soundscape construction template of FIG. 10) before subsequently evolving or otherwise undergoing a personalized adaptation to specific user data. For example, in some embodiments the personalization adaptation to specific user data can be the same as or similar to the automatic determination and/or updating of user-specific sound feature preferences as previously described above. In some cases, a user profile and/or one or more user data stores can be utilized to perform the personalized adaptation of the initial selection triggers provided in the soundscape construction template.

In one illustrative example, different heart rate BPM values can be used to implement the same type of condition threshold for different users. For example, a condition threshold might specify that the sleep soundscape of FIG. 10 will be triggered to transition from the main/body phase 1004 to the outro phase 1005 once the user's heart rate is sensed as falling below a certain threshold BPM. An initial selection trigger provided in the sleep soundscape construction template of FIG. 10 can set the threshold BPM to an initial value determined as an average sleep BPM threshold calculated for all users, as a pre-determined value, as an average sleep BPM threshold calculated for users with similar demographic information as the current user, etc. Long-term user data (e.g., of a specific user) can be measured and analyzed to determine a more personalized sleep BPM threshold for that specific user, e.g., because the specific user might tend to have a higher or lower heart rate than the average population and/or other users with same or similar demographic data as the specific user. Therefore, based on the analysis of the specific user's long-term sensor data, a personalized adaptation can be performed (and in some embodiments, continuously refined with the progression of time) to calculate and use a personalized sleep BPM threshold value to trigger the transition from main/body phase 1004 to outro phase 1005.

In some embodiments, one or more of the phases 1002-1005 depicted as part of the example sleep soundscape construction template of FIG. 10 can include one or more pre-determined sound sections (recalling that each phase can be generated from one or more sound sections, e.g., as illustrated in FIG. 8). In some examples, the pre-determined sound sections associated with a given phase can be in a specific or pre-determined order as part of the phase, e.g., the phase can contain five specific sound sections that are played in a particular order. However, it is also possible for a phase to be associated with a set of available (or selectable, permissible, etc.) sound sections, from which only a portion are selected by the soundscape generator and used to generate the phase (and hence, the soundscape) in substantially real time.

In some embodiments, the soundscape construction template can indicate one or more pre-determined sound sections that are to be played as part of a given phase (either at a particular time, or at any time within the phase) - the remaining sound sections for the phase can be adaptively determined to permit the phase to evolve beyond the sub-set of sections that are pre-determined for that phase. In some embodiments, one or more sound elements can be stored in a library or database of sound elements. In some cases, the library or database of sound elements can include or be provided by one or more of the track library 802 and/or the section library 804 of FIG. 8. The sound elements can include any or all of the different granularities described herein (e.g., single notes, chords or combinations of notes, tracks, sections, phases, soundscapes). The sound elements stored in the database/library can, in some examples, be tagged or otherwise associated with one or more different conditions, sensor inputs, user states, etc., for which the sound element is eligible to be selected by the presently disclosed soundscape generator. As such, in some examples the soundscape construction template can specify one or more tags for each phase, and the soundscape generator can then utilize the tags from the template to cross-reference the database of sound elements and make appropriate selections as it generates the phases and overall soundscape in real time. For example, in some embodiments a personalization adaptation to specific user data can be performed in a manner that is the same as or similar to the automatic determination and/or updating of user-specific sound feature preferences as previously described above.

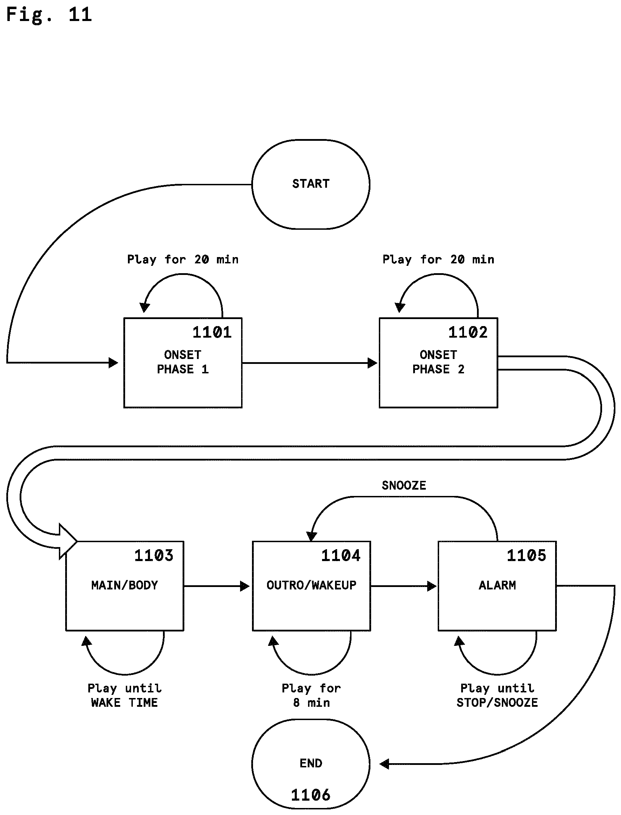

FIG. 11 illustrates one example of a prearranged soundscape that can be used for sleep (e.g., a sleep soundscape). The sleep soundscape can have or provide a characteristic sound environment based on one or more elements such as circadian rhythms, pentatonic scale, and sound masking (e.g., white noise). Based upon time sensor inputs (and in some embodiments, additional time sensor inputs, including but not limited to breathing and heart rate measurements), onset phase I (1101) and onset phase II (1102) can be played for a calculated duration or extent. For example, as illustrated, the onset phases 1101 and 1102 can be played for 20 minutes each, although it is noted that other time durations can also be utilized without departing form the scope of the claims. In some cases, the onset phases 1101 and 1102 can both have the same calculated duration, although it is also possible for the onset phases 1101 and 1102 to have separately calculated and/or different durations. One or more of the onset phases 1101, 1102 can have characteristics of slowly reducing intensity so as to allow the user to not as deeply focus on the individual notes of the song, encouraging falling asleep.

After the completion of the final onset phase (e.g., onset phase 1102), a main body phase 1103 can play until a wake time trigger is reached, whereupon an outro/wakeup phase 1104 can be played for a pre-determined amount of time (e.g., such as 8 minutes). In some embodiments, one or more sensor inputs such as user heart rate, breathing, movement, etc., can be used as a wake time trigger to cause the sleep soundscape to transition (or determine when to transition) from the main body phase 1103 to the outro/wakeup phase 1104. In some embodiments, the one or more sensor inputs can be combined or cross-referenced with user inputs such as a user inputted alarm time, wakeup time, calendar events, etc. The one or more sensors inputs can additionally or alternatively be combined or cross-referenced with external data sources, including but not limited to a sunrise time determined for a current (e.g., GPS) location of the user.

The outro/wakeup phase 1104, may for example, have increasing intensity to encourage a gradual increase in alertness for the user until an alarm phase 1105 goes off. The alarm phase 1105 can play until the user stops or ends 1106 the presentation of the sleep soundscape. In some embodiments, the user can be provided with a snooze option or UI element, wherein user selection of the snooze option causes outro phase 1104 to be played again for the same pre-determined duration (e.g., 8 minutes) or a different (e.g., lesser) duration.

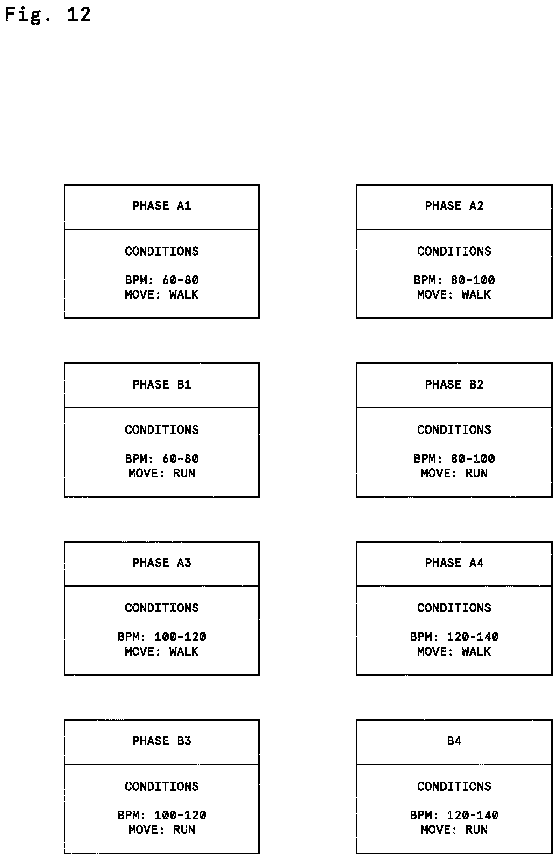

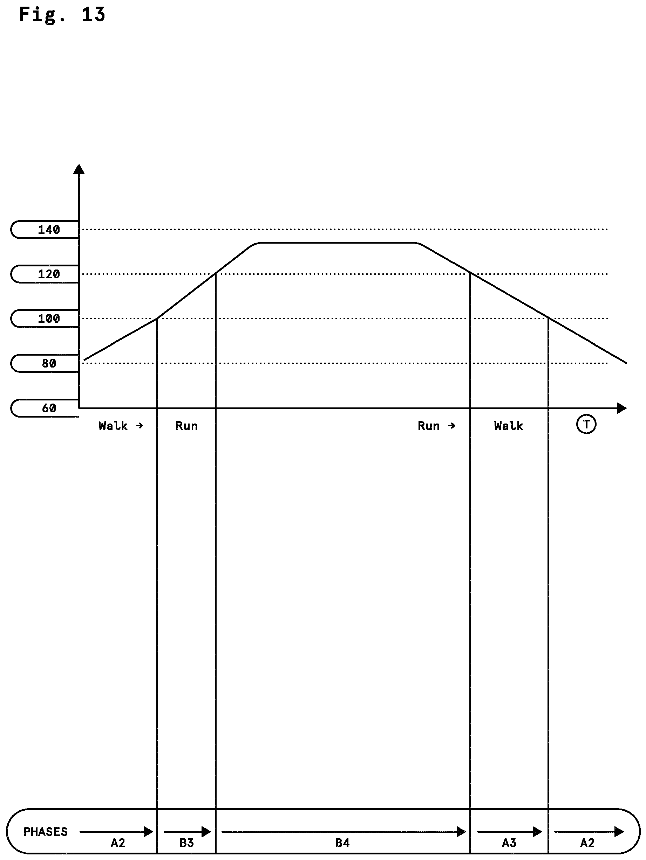

FIGS. 12-13 illustrate a dynamic soundscape generated from sound phases played at varying conditions. In FIG. 12, eight different sound phases (A1-A4 and B1-B4) are illustrated, that are triggered based upon two conditions: heart beats per minute (BPM) and a sensed user movement, shown here specifically as a sensed user cadence (e.g., walk or run). In the graph in FIG. 13, a user is walking and running - and whenever the particular condition of a sound phase is triggered, the soundscape will transition to the new sound phase. Here, the outputted soundscape will consist of phases A2 to B3 to B4 to A3 to A2.

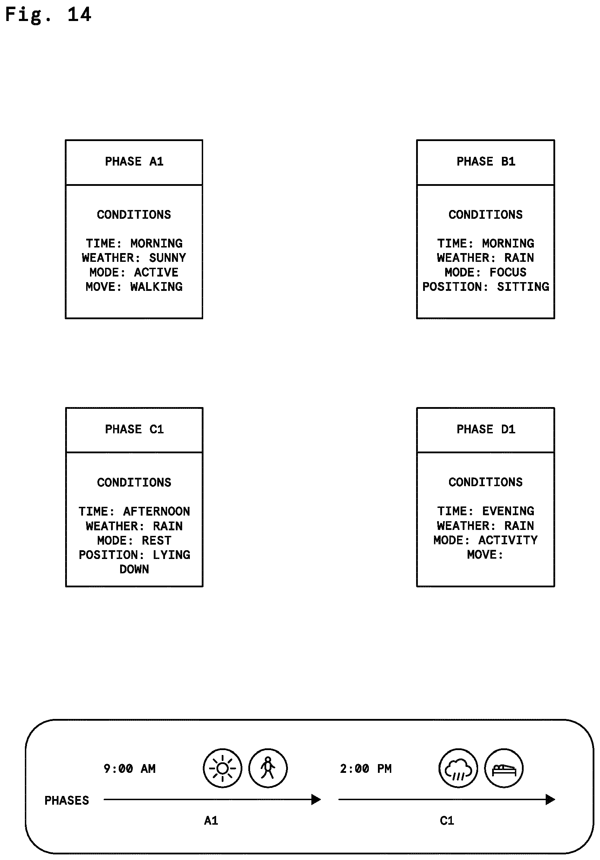

FIG. 14 further illustrates the concept of how phases may be sequenced together into a soundscape based on conditions that are present. For example, a first phase A1 can be presented in response to all of its conditions being satisfied. As illustrated, the first phase A1 trigger conditions include (but are not limited to) the time being in the morning, the weather being sunny, the user mode being active, and the user movement being walking. A second phase B1 can be presented subsequent to the first phase A1 (e.g., first phase A1 can transition to second phase B1) in response to a change in user and/or environmental conditions, such that the trigger conditions of phase A1 are no longer met and the trigger conditions of phase B1 newly become met. As illustrated, the second phase B1 trigger conditions include the time being in the morning (unchanged from phase A1), the weather being rainy, the user mode being focusing, and the user position being sitting.

A third phase C1 can be presented following second phase B1 (e.g., second phase B1 can transition to third phase C1) in response to a change in user and/or environmental conditions, such that the trigger conditions of phase B1 are no longer met and the trigger conditions of phase C1 newly become met. As illustrated, the third phase C1 trigger conditions include the time being in the afternoon, the weather being rainy, the user mode being resting, and the user position being lying down. A fourth and final phase D1 can be presented following third phase C1 (e.g., third phase C1 can transition to fourth/final phase D1) in response to a change in user and/or environmental conditions, such that the trigger conditions of phase C1 are no longer met and the trigger conditions of phase D1 newly become met. As illustrated, the fourth phase D1 trigger conditions include the time being in the evening, the weather being rainy, and the user mode being active. As illustrated, the fourth phase D1 can include only three trigger conditions, in comparison to the four trigger conditions shown for the other phases A1-C1. In some embodiments, the fourth phase D1 can include an empty 'move' trigger condition, e.g., requiring the presence of a 'move' condition to be currently detected for the user in order for fourth phase D1 to be triggered, without requiring any specific one of the possible or available 'move' conditions.

The automatic composition methods described above may further be utilized by performing artists and sound engineers to craft dynamic soundscapes from recorded sound sections (stamps). For example, an artist may provide a library of stamps of varying characteristics to a sound engine, which then analyzes and categorizes each stamp (such as note pattern, tempo, voice, instrument, etc.). These sections can then later be sequenced together according to desired rulesets. As discussed above, the selection of note sequences can dynamically change as the received sensor information changes or is refreshed, reflecting changes in the user's environment, state, or context. For example, the user's heartrate or blood pressure can determine the tempo of the note sequences in the form of note beats per minute, with a slower tempo presented when the user's blood pressure is relatively high or when the user is determined to be under stress. Alternately, if the system determines, based on movement, GPS, and/or heartrate that the user is running, the system can increase the tempo of the notes presented to the user. For example, the tempo can begin at 55-70 beats per minute and increase to 100 beats per minute or more to energize the user while running or working out.

### Text-Based Sound Engine for Automatic Generation of Continuous Music Soundscapes

In another illustrative example, the systems and techniques described herein can be used to automatically generate a continuous music soundscape using one or more inputs of text-based data. The continuous music soundscape can be similar to the various soundscapes described above with respect to FIGS. 1-14. In some aspects, the text-based continuous music soundscape can be generated based on using one or more custom note generators that may be the same as or similar to those described above with respect to FIGS. 1-14. In some embodiments, a text-based continuous music soundscape can be generated based on utilizing one or more text-based inputs as additional inputs to a soundscape generator (e.g., the text-based inputs may be additional inputs that are combined with the various user mode, state, context, and/or sensor data inputs described above with respect to FIGS. 1-14.). In still further embodiments, a text-based continuous music soundscape can be generated using text-based data as input, without using user and/or sensor information as additional inputs.

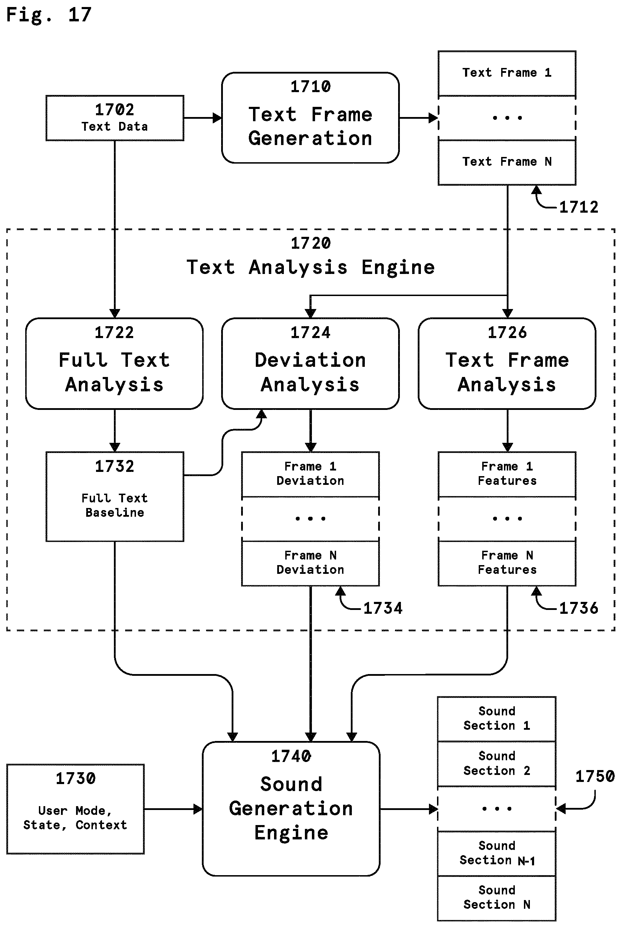

As contemplated herein, a text-based sound generation engine (e.g., such as the sound generation engine 1740 of FIG. 17, described below) can be used to generate a plurality of sound sections each corresponding to a particular portion of a text-based input. The text-based input can also be referred to as "text data" or a "body of text." In some embodiments, an overall textual input (e.g., a book or e-book, an article, a scientific paper, a transcript, a real-time generated speech-recognition output, text data corresponding to an audiobook or podcast, etc.) can be divided into a series of chunks or frames, and each text frame can be analyzed and used to generate a corresponding sound section for the respective text frame. For example, a body of text can be divided into a plurality of text frames based on an existing organizational structure already present in the body of text when received as input by the text analysis engine described herein. In one illustrative example, a body of text can be divided into a plurality of text frames wherein each text frame corresponds to a paragraph, chapter, section, etc., within the input body of text provided to the text analysis engine.

For instance, FIG. 15 illustrates an example construction of a soundscape comprising a plurality of sections 1551-1554. The overall soundscape can correspond to a particular body of text that was received as input to a text-based sound generation engine, as will be described in greater depth below. For example, as mentioned previously, the body of text can be a book or other work of literature (e.g., an e-book, digital file, or digital representation thereof), an article, a scientific publication, an academic publication, a pre-existing transcript, a text data corresponding to an audiobook, podcast, or other spoken word audio, and/or a real-time generated transcript output by a speech recognition engine, etc.

While the overall soundscape corresponds to the body of text provided as input to the text-based sound generation engine, each of the sound sections 1551-1554 can be generated to uniquely correspond to a particular text frame that comprises a subset of the text data contained in the body of text. For example, each of the sound sections 1551-1554 can correspond to a different paragraph of the overall body of text, a different chapter of the body of overall text, a different section of the body of overall text, etc. In some examples, the division of a body of text into its constituent plurality of text frames can be performed using a pre-determined (e.g., fixed or static) text frame length, such as one paragraph, a fixed quantity of characters, a fixed quantity of words, a fixed quantity of lines, a fixed quantity of pages, etc. In the context of the various examples described below, reference is made to an illustrative example in which the text frame length/division logic is implemented on a per-paragraph basis. However, it is noted that this is done for purposes of clarity of illustration and example, and is not intended to be construed as limiting - various other text frame lengths and/or text frame division logics can also be utilized interchangeably with the systems and techniques described herein, without departing from the scope of the claims.

In some embodiments, the input body of text can be obtained or represented in a paginated form, wherein the input body of text comprises one or more pages of text, each page of text including at least a portion of one or more paragraphs. For instance, as depicted in FIG. 15, a first page 1501 can include the entirety of a first paragraph (shown as bold and underlined text) and a starting portion of a second paragraph (shown as regular text). The second paragraph can continue onto a second page 1502, which includes only the remaining portion of the second paragraph.

A third parge 1503 can include the entirety of a third paragraph (shown as bolded text) and a starting portion of a fourth paragraph (shown as regular text). The fourth paragraph can continue onto a fourth page 1504, which includes only the remaining portion of the fourth paragraph. In general, it is contemplated that an input body of text can comprise a plurality of different pages pg. 1 - pg. *n* where, as mentioned above, each page can include a portion of a single paragraph, a full paragraph, a full paragraph and a portion of a next paragraph, multiple paragraphs, multiple paragraphs and one portion of a next paragraph, etc. It is also noted that the pagination of a body of text received as input can vary, for example based on settings or parameters used for an electronic presentation of the text on the display of a computing device, e-reader, etc. (e.g., the quantity of pages can increase as the font size, margins, spacing, etc., used to render the text to fill the display are increased; the quantity of pages can decrease as the font size, margins, spacing, etc., used to render the text to fill the display are decreased).

In some embodiments, the pagination of an input body of text can be used to determine the text frame size. For instance, one approach would be to set the text frame size equal to the page size, such that each text frame includes all of the text presented on a particular single page of the input body of text. In other examples, the pagination of the input body of text can be used or otherwise considered when presenting the text to a reader (e.g., presenting the text along with the presently disclosed automatically generated soundscape(s) that are generated based on the text), as will be described in greater depth below.

Each text frame (e.g., paragraph, in the example of FIG. 15) can be used to generate a corresponding sound section. For instance, a first text frame "A" can be generated based on extracting the first paragraph from the page 1501. A second text frame "B" can be generated based on extracting the starting portion of the second paragraph from page 1501 and combining it with the remaining portion of the second paragraph extracted from page 1502. A third text frame "C" can be generated based on extracting the third paragraph from page 1503. A fourth text frame "D" can be generated based on extracting the starting portion of the fourth paragraph from page 1503 and combining it with the remaining portion of the fourth paragraph from page 1504.

Each of the text frames A-D can be used to generate a corresponding sound section A-D, shown in FIG. 15 as the sound sections 1551, 1552, 1553, and 1554, respectively. The sound sections can be combined together to form a continuous music soundscape, as has been described previously with respect to the sound sections and soundscapes described above with respect to FIGS. 1-14.

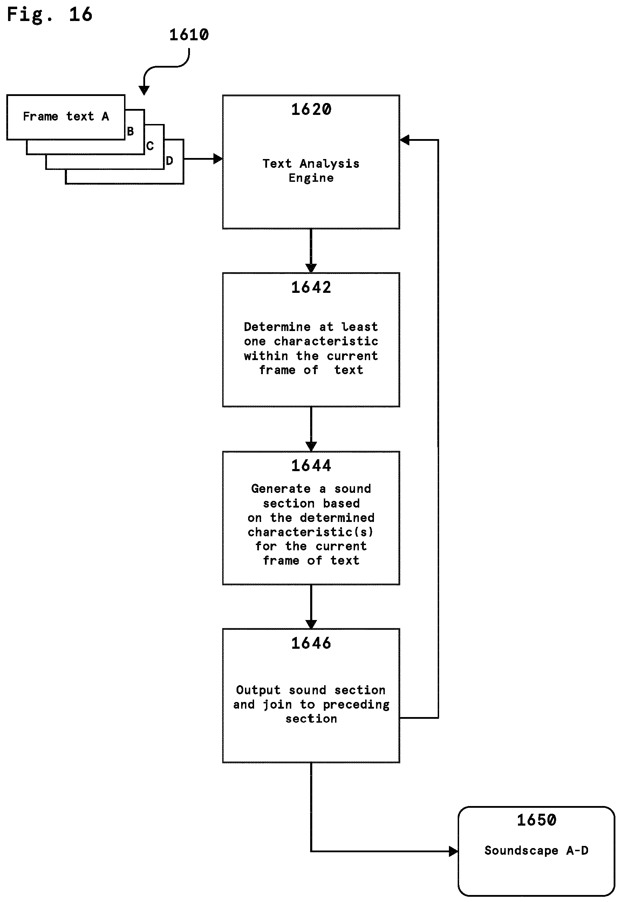

For example, FIG. 16 is a flow diagram illustrating an example process for automatically generating a continuous music soundscape using a text-based sound engine, in accordance with some examples. In some aspects, the text-based sound engine can include, be associated with, or otherwise be implemented based on a text analysis engine 1620. The text analysis engine 1620 of FIG. 16 may be the same as or similar to the text analysis engine 1720 of FIG. 17, which will be described in greater depth below.

As illustrated, the text analysis engine can receive as input an input body of text. The input body of text can be obtained from various sources and in various formats. In some embodiments, the text analysis engine 1620 receives as input a plurality of text frames 1610 that have previously been segmented or divided into the individual text frames A-D depicted in FIG. 16. In other words, the text analysis engine 1620 can receive the individual text frames corresponding to the input body of text, without receiving the input body of text as a separate file or data. In other examples, the text analysis engine 1620 can receive as input the complete body of text, along with metadata or other information indicating previously determined locations within the text where each respective text frame starts and/or ends. In still further embodiments, the text analysis engine 1620 can receive as input the complete body of text and may perform the segmentation or division of the complete body of text into the plurality of individual text frames 1610 itself.

In one illustrative example, the generated sound sections 1551-1554 (e.g., sound sections A-D)corresponding to the text frames A-D) depicted in FIG. 15 can be combined to form a continuous text-based soundscape. For instance, the continuous text-based soundscape comprising the generated sound sections 1551-1554 of FIG. 15 can be the same as or similar to the soundscape 1650 depicted in FIG. 16. A text-based soundscape corresponding to a plurality of different text frames (e.g., such as soundscape 1650) can be presented for playback or otherwise output to a speaker or other audio output device as a user reads the corresponding text frame. For instance, with reference to both FIGS. 15 and 16, the sound section A (1551) can be played while a user reads the first paragraph on page 1501, corresponding to sound section A. As the user transitions from reading the first paragraph to reading the beginning of the second paragraph on page 1501, so too can the soundscape playback transition from sound section A (1551) to sound section B (1551). The transition between sound sections can be implemented in a manner the same as or similar to that described above with respect to the sound section transitions and/or soundscape construction and generation of FIGS. 1-14.

In some embodiments, the sound sections A-D are generated to correspond to one or more features or characteristics determined for the respective text frame that corresponds to each sound section. For instance, at block 1642, the text analysis engine 1620 can determine at least one characteristic within the current frame of text. In some cases, determining at least one characteristic within the current frame of text can include determine frame-specific features (e.g., unique to the text frame) and/or can include determining one or deviations or differences between the current text frame and the input body of text as a whole. In some aspects, determining at least one characteristics within the current frame of text can further include determining one or more secondary or additional deviations, differences, etc., between the current text frame and a subset of additional text frames. In other words, in addition to analyzing the characteristics of the current text frame against the characteristics of the input body of text as a whole, the text analysis engine 1620 can additionally analyze the characteristics of the current text frame against the characteristics of a subset of the plurality of other text frames 1610. In some examples, the first analysis could include comparing the features/characteristics of the current paragraph (e.g., a text frame) against the features/characteristics of an entire book as a whole (e.g., the input body of text), and comparing the features/characteristics of the current paragraph against the features/characteristics of the particular section or chapter where the paragraph is located.

For instance, the entire body of text provided as input can be analyzed to determine one or more baseline characteristics according to one or more text analysis metrics. The baseline characteristics can include a type of text (e.g., fiction, non-fiction, prose, poem, article, transcript, scientific work, etc.) and/or other classifications made over the corpus as a whole. In some aspects, the baseline characteristics can include a complexity of the text as a whole and/or various other information determined based on performing a complexity analysis for the input body of text. The baseline characteristics can additionally, or alternatively, include information determined based on a semantic analysis of the text as whole. For instance, semantic analysis can be used to determine a mood, theme, emotion, etc., corresponding to the body of text as a whole, and the determined mood, theme, emotion, etc., can be used as a baseline characteristics for generating the soundscape/generating the individual sound sections included in the soundscape.

At block 1644, each sound section A-D can be generated based on analyzing the corresponding text frame for the sound section, and determining one or more deviations between a baseline value of a text analysis metric and a frame-specific value of the same metric, wherein the frame-specific value of the same metric is determined based on the text-frame. Based on the deviation(s) between the calculated baseline information and the frame-specific information, the sound sections can be generated to include corresponding adjustments. Further details and examples of the text analysis performed to determine the baseline and frame-specific characteristics will be described below with respect to the text analysis engine 1720 of FIG. 17. In some embodiments, the sound sections can be generated with corresponding adjustments associated with the characteristics/features determined at block 1642, in a manner the same as or similar to the sound section generation based on sensor input, user state information, etc., described previously above with respect to FIGS. 1-14.

At block 1646, the sound section for the current text frame is outputted and joined to the preceding sound section to thereby generate the continuous text-based soundscape 1650. The joining of sound sections to form a continuous soundscape can be performed as described previously with respect to FIGS. 1-14.

FIG. 17 is a block diagram illustrating a text analysis engine 1720 that is used with a sound generation engine to automatically generate soundscapes based on one or more textual inputs, in accordance with some examples.

As illustrated, the text analysis engine 1720 can receive as input an input body of text 1702. The input body of text can also be referred to as text data 1702. The text data 1702 can be obtained from various sources and in various formats. In some embodiments, the text data 1702 can be obtained and processed in advance to generate one or more soundscapes 1750 corresponding to the text data 1702 that can later be transmitted and/or provided to an audio playback device or other user device for playing the automatically generated text-based soundscape while the user reads the corresponding body of text. In some examples, the text data can correspond to an audiobook, podcast, spoken word audio data or audio recording, etc. For instance, the text data 1702 may be an e-book, text file, or other text data corresponding to an audiobook (e.g., the text contained in the text data 1702 matches or otherwise corresponds to the spoken words of the audiobook). In one illustrative example, the text data 1702 corresponding to an audiobook can be obtained and processed in advance to generate one or more soundscapes 1750 that correspond to the audiobook and can be used to enhance or otherwise augment user playback of the audiobook (e.g., by mixing the soundscape audio with the original spoken word of the audiobook). For instance, the sound sections of a soundscape 1750 generated for the underlying text data 1702 of an audiobook can be mapped or otherwise correlated to existing demarcation points or other organizational features/locations within the audiobook, such that the playback of the soundscape 1750 sound sections is synchronized with the playback of the corresponding spoken words in the audiobook. For instance, one or more first sound sections can be generated corresponding to the text of chapter one of an audiobook - the one or more first sound sections can be provided to an audio output for synchronized output with the audiobook track in which the narrator reads chapter one. In some embodiments, sound sections of a soundscape 1750 corresponding to an audiobook can be generated to have a same or similar duration as the corresponding text frame(s) in the spoken word audiobook. For instance, the duration of one or more sound sections generated for chapter one of an audiobook can be the same as or similar to the duration of the chapter one audio contained in the audiobook data. By matching the duration of the audiobook portions (e.g., chapters, sections, etc.) to the duration of the corresponding automatically generated sound sections, the playback of the audiobook can be synchronized with the playback of the soundscape.

In other examples, the text data 1702 can be obtained and processed to generate the text-based soundscape(s) 1750 in substantially real-time. For instance, in examples where the input body of text comprises a live transcription of spoken words or speech (e.g., a live transcript generated using a speech recognition engine, algorithm, machine learning network, etc.), the entire text data 1702 is not available to perform prior or offline processing to generate the soundscapes 1750 before the time of playback to the user. Instead, the text data 1750 can comprise automatically transcribed text that is streamed to the text analysis engine for use in generating corresponding sound sections of the text-based soundscape 1750. In some cases, the automatically transcribed text data 1702 can be accumulated into text frames 1712 based on a pre-determined duration of spoken text (e.g., every 5 seconds, 15 seconds, 30 seconds, etc.).

For instance, a text frame generation engine 1710 can receive as input the text data 1702 (whether a complete body of text that is available in advance, such as a book/e-book, article, scientific or academic work, etc., or a real-time transcription of spoken words). Based on receiving the text data 1702 as input, the text frame generation engine 1710 generates a plurality of text frames 1, ..., N as output. The plurality of text frames 1712 can be provided as an additional input to the text analysis engine 1720, as depicted in FIG. 17. In examples where the processing is performed when the entire body of text is available in advance as the text data 1702 (e.g., most or all scenarios other than the live transcription scenario), the text frame generation engine 1710 may provide the text frames 1712 to text analysis engine 1720 sequentially or may provide the text frames 1712 in bulk for the text analysis engine 1720 to then process individually (e.g., as will be described in greater depth below). However, in the live transcription scenario, the text frame generation engine 1710 is not able to provide all of the text frames 1712 in bulk, for the same reason that a complete text data 1702 is not available until the end of the transcription process (and therefore the end of the automatic text-based soundscape generation process, which is performed in sync or in tandem with the live transcription).

In some examples, continuing in the discussion of the scenario of automatic or live transcription of spoken word to obtain the text data 1702, the automatically transcribed text data 1702 can be accumulated into text frames 1712 based on using the text frame generation engine 1710 to detect pauses in the spoken words or speech. While a text frame 1712 is being accumulated from the automatically transcribed text data 1702, the audio output of the soundscape 1750 can be based on the previous sound section (e.g., generated from the previous text frame) and/or various other input parameters to a sound generation engine (e.g., parameters other than text-based parameters). For instance, while a text frame 1712 is being accumulated from the automatically transcribed text data 1702, the audio output of the soundscape 1750 can be based on the previous sound section and/or any one or more of the input parameters described previously above with respect to the automatic soundscape generation performed based on the examples of FIGS. 1-14.

As noted above, the text data 1702 can be obtained as an input text data (e.g., the input data can be obtained already in a textual data format) and/or can be generated from input data of a different modality (e.g., the input data can be audio that is processed to generate a live transcription of spoken words in the audio).

Additionally, or alternatively, in some embodiments the systems and techniques described herein can generate or otherwise obtain at least a portion of the text data 1702 based on one or more images. For instance, the one or more images can be images, illustrates, figures, etc., that are embedded in a larger textual work that is used by the text analysis engine 1720 and sound generation engine 1740 to generate the automatic soundscape composition 1750. In one illustrative example, at least a portion of the text data 1702 can be generated based on a photograph, illustration, or other picture that accompanies a particular portion of the larger textual work being used as input.

For instance, the text data 1702 may be obtained from or otherwise correspond to a children's book, which often includes multiple illustrations to accompany the text (and in some cases, may include an equal or greater quantity of illustrations as compared to the quantity of text). Accordingly, some (or all) of the illustrations accompanying the text data 1702 can be analyzed and used to provide further input to the text analysis engine 1720. In some embodiments, the images (e.g., illustrations) can be analyzed by an image classification machine learning network that is trained to generate descriptive text corresponding to the input image. In such examples, the generated descriptive text for an image can be combined with the portion of the text data 1702 that is presented on the same page, in the same chapter, etc., as the image. In some cases, generated descriptive text can be inserted in-line with the text data 1702, at the same or similar location of the underlying image was found relative to the text data 1702. In other examples, the text frame generation engine 1710 can generate one or more separate frames corresponding to the image data accompanying text data 1702, and sequence the image-derived frames in the correct sequential order relative to the text-derived frames 1712.

In the example above, it is contemplated that images or illustrations accompanying the text data 1702 can be used to generate additional text data corresponding to each image or illustration, with the additional generated text data subsequently being processed in a manner the same as or similar to the original text frames 1712 that are extracted from the input text data 1702. In some embodiments, the images or illustrations accompanying text data 1702 can be provided to the text analysis engine 1720 as non-text inputs that may be used to augment the text analysis and soundscape generation process. For instance, an image or illustration can be provided directly to the text analysis engine 1720, which can include an image-based version of one or more (or all) of the full text analysis engine 1722, the deviation analysis engine 1724, and/or the text frame analysis engine 1726. The image-based versions of each engine can be configured to process or otherwise analyze an image input (e.g., the image or illustration accompanying a portion of the text data 1702) to determine same or similar properties as are determined by the text-based version of each engine.

For example, an image-based version of full text analysis engine 1722 can be a machine learning network trained to determine a visual complexity or semantic visual baseline (e.g., mood, theme, etc.) corresponding to one or more images accompanying text data 1702. In another example, an image-based version of deviation analysis engine 1724 can be used to determine a frame-specific deviation information for each image frame of a plurality of image frames. For example, the plurality of image frames can include an image frame for each illustration accompanying the text data 1702 - the plurality of image frames can be analyzed by the image-based version of full text analysis engine 1722 to determine a semantic image-based baseline information, which the image-based version of deviation analysis engine 1724 can analyze against each image frame to determine deviation information for each image frame.

Similarly, an image-based version of the text frame analysis engine 1726 can be used to determine additional frame-specific features and/or characteristics of each image frame (e.g., of each illustration or picture accompanying the text data 1702). In some aspects, the frame-specific features and/or characteristics determined for each image frame can be the same as or similar to the frame-specific features and./or characteristics determined for each text frame 1712. In some examples, the frame-specific features and/or characteristics determined for each image frame can be different than (e.g., in addition to, augmenting, etc.) the set of frame-specific text features and/or characteristics.

As illustrated, the text analysis engine 1720 can include a full text analysis engine 1722, a deviation analysis engine 1724, and/or a text frame analysis engine 1726. The full text analysis engine 1722 receives as input the full and complete body of text as the text data 1702 (when available, i.e., in most or all scenarios other than the live transcription scenario). Based on receiving the text data 1702 of the full textual work, the full text analysis engine 1722 determines one or more features or characteristics representative of the full textual work (e.g., across the combination of all of the plurality of text frames 1712 that will be generated).

For instance, the entire body of text provided as input text data 1702 can be analyzed to determine one or more baseline characteristics according to one or more text analysis metrics. The baseline characteristics can include a type of text (e.g., fiction, non-fiction, prose, poem, article, transcript, scientific work, etc.) and/or other classifications made over the corpus as a whole. In some aspects, the baseline characteristics can include a complexity of the text as a whole and/or various other information determined based on performing a complexity analysis for the input body of text. The baseline characteristics can additionally, or alternatively, include information determined based on a semantic analysis of the text as whole. For instance, semantic analysis can be used to determine a mood, theme, emotion, etc., corresponding to the body of text as a whole, and the determined mood, theme, emotion, etc., can be used as a baseline characteristics for generating the soundscape/generating the individual sound sections included in the soundscape.

According to the invention, the full text analysis engine 1722 generates as output one or more full text baselines 1732. Full text analysis engine (1722) performs a complexity analysis to determine a full text baseline complexity information 1732. Additionally, or alternatively, full text analysis engine 1722 can perform sentiment analysis to determine a full text baseline sentiment information 1732. For example, the sentiment analysis can be performed using a pre-built sentiment analysis neural network (NN) that is trained to identify the probability of different emotions occurring or otherwise being present within the full text data 1702. In some examples, the sentiment analysis NN can output a weight or probability corresponding to each different emotion (or other sentiment class) that the sentiment analysis NN is trained on. In some cases, sentiment analysis can be performed to determine a baseline sentiment information 1732 that indicates if the mood is positive, negative, or neutral.

In some embodiments, the full text analysis 1722 can implement multiple different baseline text analyses in the full text baseline information 1732. For instance, a baseline text complexity and a baseline sentiment analysis information can both be included in the full text baseline information 1732. In some cases, the full text analysis 1722 may implement a selected type of baseline analysis, for example selected based on the type of the textual work as a whole. For instance, non-fiction works may be processed using full text analysis engine 1722 to determine a complexity baseline, while fiction works may be processed using full text analysis engine 1722 to determine a semantic baseline such as mood or theme. In some cases, the type of text can be determined using a classification algorithm and/or classification machine learning network included in the text analysis engine 1720.

The full text baseline information 1732 is output from the text analysis engine 1720 to a sound generation engine 1740. The baseline information 1732 can be used to set overall parameters for the text-based soundscape 1750 that will be automatically generated by the sound generation engine 1740. In some embodiments, the baseline information 1732 can be used in combination with at least a portion of user mode, state, and context information 1730. The user information 1730 can include various sensor inputs and/or other sensor information such as location, heartrate, temperature, ambient light level, time of day, etc., and may be the same as or similar to any one or more of: the raw inputs 502, real time processed inputs 504, and/or user profile data 506 of FIG. 5; the user mode, state, context information 514 of FIG. 5; the user status information 602 of FIG. 6; the user mode 604, user state 606, and/or user context 608 information of FIG. 6; the sensor output information 610 of FIG. 6; the high frequency sensor inputs 612 of FIG. 6; the phase information and conditions of FIG. 12 and FIG. 14; and/or any other input information described above with respect to FIGS. 1-14 as being used for automatic soundscape generation.

Returning to FIG. 17, the full text baseline information 1732 is additionally provided as an input to a deviation analysis engine 1724 that is included within the text analysis engine 1720. The deviation analysis engine 1724 uses the full text baseline information 1732 to determine frame-specific deviation information for each text frame of the plurality of text frames 1-N (e.g., text frames 1712).

In particular, the frame-specific deviation information 1734 can be used to generate each sound section to be based on a portion of the textual work currently being read by or presented to the user. Each sound section 1750 can be generated based on using the deviation analysis engine 1724 to analyze the corresponding text frame for the sound section against the full text baseline information 1732. The same baseline information 1732 can be used by deviation analysis engine 1724 to generate the corresponding frame-specific deviation information 1734 for each frame of the plurality of text frames 1712 (e.g., sound section 1 is generated based on the frame 1 deviation determined for text frame 1 against baseline 1732; ...; sound section N is generated based on the frame N deviation determined for text frame N against baseline 1732; etc.).

As noted previously, the full-text baseline information 1732 can comprise a single metric (e.g., complexity for non-fiction, semantic mood or theme for fiction, etc.) or can comprise multiple different text analysis metrics. In either scenario, the deviation analysis engine 1724 is configured to determine the frame-specific deviation information 1734 as a deviation between the baseline value 1732 of each metric, and a calculated frame-specific value for that same metric. For instance, if the full-text baseline information 1732 includes complexity information and semantic information, the deviation analysis engine 1724 can calculate a complexity for the current text frame and can calculate semantic analysis information for the current text frame. The frame-specific deviation information 1734 then comprises a deviation between the baseline complexity and calculated current frame complexity, and further comprises a deviation between the baseline semantic analysis information and the calculated current frame semantic analysis information.

In some cases, the same machine learning network and/or neural network that is used to perform text analysis for the baseline calculation for a given metric can be used to perform the same (or similar) text analysis for the deviation calculation of the same given metric for each particular text frame 1712. For example, when a machine learning network is used to perform complexity analysis for the complete text data 1702, the same machine learning network can be used to perform deviation calculations based on determining the same complexity metric for each particular text frame. When a semantic analysis neural network is used to perform semantic analysis for the complete text data 1702, the same semantic analysis neural network can be used to perform deviation calculations based on using the same semantic analysis network to analyze each particular text frame. Based on the deviation(s) between the calculated baseline information 1732 for each text analysis metric utilized by the text analysis engine 1720, and the frame-specific information determined for each frame for each of the same text analysis metrics, the corresponding sound sections 1, ..., N of the soundscape 1750 can be generated to include corresponding adjustments.

In some embodiments, the text analysis engine 1720 can additionally include one or more text frame analysis engines 1726 that can be used to determine additional frame-specific features and/or characteristics of the text. Unlike the frame-specific deviation information 1734 (which depend on the full text baseline information 1732), the frame-specific features/characteristics 1736 determined by the text frame analysis engine(s) 1726 may be separate and independent from the full text baseline information 1732. The frame-specific features 1736 can use the same metrics as the baseline and deviation calculations, can use different or additional metrics from those used by the baseline and deviation calculations, or a combination of the two.

For example, the full text baseline 1732 may be determined as complexity information, in which case the frame-specific deviation 1734 is also determined as complexity information (e.g., the deviation of the frame-specific complexity from the full text baseline complexity). In this example, semantic information is not included in either the full text baseline 1732 or the frame-specific deviation 1734. Instead, the text frame analysis engine 1726 can be implemented using a semantic analysis neural network, such as the semantic analysis NN described above, and semantic analysis information (mood, theme, emotion, etc.) determined for each text frame 1712 may be used as a frame-specific feature 1736 to further adjust or customize the corresponding sound section generated for the particular text frame 1712.

In another illustrative example, the frame-specific deviation 1736 can utilize a text analysis metric that is the same as or similar to a text analysis metric also used in the full text baseline 1732 and the frame-specific deviation 1734. For instance, continuing in the example above, the frame-specific deviation 1734 can be used as a sound section generation input indicative of the difference between the full text baseline complexity 1732 and the frame-specific complexity4. An additional frame-specific input 1736 can comprise the frame-specific complexity standing on its own.

In yet another illustrative example, the full text baseline 1732 may be determined as the combination of complexity information and semantic analysis information, in which case the frame-specific deviation 1734 is also determined as a combination of complexity and semantic analysis information (e.g., the deviation of the frame specific complexity from the baseline complexity, and the deviation of the frame specific semantic information from the baseline semantic information). In such examples, the frame-specific features 1736 generated by the text frame analysis engine 1726 may comprise the semantic analysis information standing alone (e.g., the mood, theme, emotion, etc.) detected within only the text of the currently analyzed text frame (e.g., current paragraph). In another example, the frame-specific feature 1736 may comprise a different type of semantic analysis information that is used to further augment the adaptation and/or customized of the corresponding sound section generated by sound generation engine 1740. For instance, the baseline and deviation analyses 1722 and 1724, respectively, may be performed based on semantic information of a first type (e.g., positive or negative, theme, etc.) while the frame-specific analysis 1726 is performed based on semantic information of a third type (e.g., particular emotion expressed within the currently analyzed text frame 1712).

The foregoing descriptions of specific exemplary embodiments of the present invention have been presented for purposes of illustration and description. They are not intended to be exhaustive nor to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. A method for creating a personalized sound environment for a user, the method comprising:
obtaining text data comprising a plurality of words;
analyzing the plurality of words of the text data to generate one or more full text baselines, each full text baseline indicative of one or more of a complexity of the text data, semantic analysis information of the text data, or a theme of the text data;
generating a plurality of text frames based on the text data, wherein each respective text frame of the plurality of text frames includes a subset of the plurality of words;
analyzing, using a machine learning network, each respective text frame to generate one or more features corresponding to the respective text frame and the subset of the plurality of words, wherein analyzing each respective text frame comprises determining a frame-specific deviation information indicative of a deviation between the full text baseline and the one or more features corresponding to the respective text frame, wherein the full text baseline and the one or more features are calculated using a same text analysis metric;
determining two or more sound sections for presentation to a user, each sound section corresponding to a particular text frame of the plurality of text frames and generated based at least in part on the one or more features of the particular text frame;
generating a personalized sound environment for presentation to the user, wherein the personalized sound environment includes at least the two or more sound sections; and
presenting the personalized sound environment to the user on a user device.

2. The method of claim 1, wherein the personalized sound environment is presented to the user based on:
presenting at least a portion of the text data on a display of the user device;
determining an estimated current reading position of the user, indicative of a location within the text data; and
synchronizing playback of the personalized sound environment with presentation of the text data based on the estimated current reading position of the user.

3. The method of claim 2, wherein synchronizing playback comprises:
determining a corresponding text frame of the plurality of text frames that includes the estimated current reading position of the user; and
presenting a respective sound section of the personalized sound environment, wherein the respective sound section is a sound section generated for the corresponding text frame.

4. The method of any previous claim, wherein:
the machine learning network comprises a semantic analysis neural network configured to determine the one or more features of the respective text frame as a mood or a theme associated with the respective text frame; and/or
the machine learning network comprises a text classification neural network configured to determine the one or more features of the respective text frame as a text type classification associated with the respective text frame.

5. The method of any previous claim, further comprising receiving output from a plurality of sensors, the sensor output detecting a state of the user and an environment in which the user is active,
wherein optionally the two or more sound sections are selected from a plurality of sound sections based on the corresponding features of the particular text frame and further based on the sensor output.

6. The method of any previous claim, wherein the plurality of text frames are nonoverlapping, and wherein each text frame includes a unique subset of the plurality of words.

7. The method of any previous claim, wherein generating the plurality of text frames based on the text data comprises:
parsing the text data and segmenting the parsed text data into the plurality of text frames based on identifying a text frame start trigger or a text frame end trigger in the parsed text data,
wherein optionally the text frame start trigger or the text frame end trigger comprises one or more of:
a paragraph break, a section header, or a chapter header included in the parsed text data, and/or
wherein optionally segmenting the parsed text data into the plurality of frames is based on a pre-determined text frame length.

8. The method of any previous claim, wherein the text data corresponds to one of: an e-book, an article, or a scientific publication.

9. The method of any previous claim, wherein the text data comprises a transcript generated based on spoken word audio data,
wherein optionally the spoken word audio data is an audiobook, and/or
wherein optionally the spoken word audio data is captured by a microphone of the user device, and wherein the text data comprises a real-time transcript generated using a speech recognition engine.

10. The method of claim 9, wherein when the personalized sound environment is generated in real time, it is generated without using one or more full text baselines calculated for the input text data.

11. The method of claim 9, wherein the personalized sound environment is output in real-time using a speaker of the user device, and is synchronized with the spoken word audio data captured by the microphone of the user device.

12. A sound environment generation device for creating a personalized sound environment for a user, comprising a text analysis engine (1620, 1720) and a sound generation engine (1740), the sound environment generation device configured to perform the method steps of any of the previous methods.

## Patentansprüche

1. Verfahren zum Erschaffen einer personalisierten Klangumgebung für einen Benutzer, wobei das Verfahren Folgendes aufweist:
Erhalten von Textdaten, die eine Vielzahl von Wörtern aufweisen;
Analysieren der Vielzahl von Wörtern der Textdaten zum Erzeugen einer oder mehrerer Volltext-Basislinien, wobei jede Volltext-Basislinie eines oder mehrere von einer Komplexität der Textdaten, semantischen Analyseinformationen der Textdaten oder einem Thema der Textdaten angibt;
Erzeugen einer Vielzahl von Textrahmen auf der Grundlage von den Textdaten, wobei jeder jeweilige Textrahmen der Vielzahl von Textrahmen eine Teilmenge der Vielzahl von Wörtern enthält;
Analysieren jedes jeweiligen Textrahmens unter Verwendung eines maschinellen Lernnetzwerks zum Erzeugen eines oder mehrerer Merkmale, die dem jeweiligen Textrahmen und der Teilmenge der Vielzahl von Wörtern entsprechen, wobei das Analysieren jedes jeweiligen Textrahmens ein Bestimmen einer rahmenspezifischen Abweichungsinformation aufweist, die eine Abweichung zwischen der Volltext-Basislinie und dem einen oder den mehreren Merkmalen angibt, die dem jeweiligen Textrahmen entsprechen, wobei die Volltext-Basislinie und das eine oder die mehreren Merkmale unter Verwendung einer gleichen Textanalysemetrik berechnet werden;
Bestimmen von zwei oder mehr Klangabschnitten zur Darstellung für einen Benutzer, wobei jeder Klangabschnitt einem konkreten Textrahmen der Vielzahl von Textrahmen entspricht und zumindest teilweise auf der Grundlage von dem einen oder der mehreren Merkmalen des konkreten Textrahmens erzeugt wird;
Erzeugen einer personalisierten Klangumgebung zur Darstellung für den Benutzer, wobei die personalisierte Klangumgebung zumindest die zwei oder mehr Klangabschnitte enthält; und
Darstellen der personalisierten Klangumgebung für den Benutzer auf einer Benutzervorrichtung.

2. Verfahren nach Anspruch 1, wobei die personalisierte Klangumgebung für den Benutzer auf der Grundlage von Folgendem dargestellt wird:
Darstellen von zumindest einem Teil der Textdaten auf einer Anzeige der Benutzervorrichtung;
Bestimmen einer geschätzten aktuellen Leseposition des Benutzers, die einen Ort innerhalb der Textdaten angibt; und
Synchronisieren der Wiedergabe der personalisierten Klangumgebung mit der Darstellung der Textdaten auf der Grundlage von der geschätzten aktuellen Leseposition des Benutzers.

3. Verfahren nach Anspruch 2, wobei das Synchronisieren der Wiedergabe Folgendes aufweist:
Bestimmen eines entsprechenden Textrahmens der Vielzahl von Textrahmen, der die geschätzte aktuelle Leseposition des Benutzers enthält; und
Darstellen eines jeweiligen Klangabschnitts der personalisierten Klangumgebung, wobei der jeweilige Klangabschnitt ein Klangabschnitt ist, der für den entsprechenden Textrahmen erzeugt wird.

4. Verfahren nach einem der vorhergehenden Ansprüche, wobei:
das maschinelle Lernnetzwerk ein neuronales semantisches Analysenetzwerk aufweist, das dazu konfiguriert ist, das eine oder die mehreren Merkmale des jeweiligen Textrahmens als eine Stimmung oder ein Thema zu bestimmen, die bzw. das mit dem jeweiligen Textrahmen verknüpft ist; und/oder
das maschinelle Lernnetzwerk ein neuronales Textklassifikationsnetzwerk aufweist, das dazu konfiguriert ist, das eine oder die mehreren Merkmale des jeweiligen Textrahmens als eine Texttypklassifikation zu bestimmen, die mit dem jeweiligen Textrahmen verknüpft ist.

5. Verfahren nach einem der vorhergehenden Ansprüche, das ferner ein Empfangen einer Ausgabe von einer Vielzahl von Sensoren aufweist, wobei die Sensorausgabe einen Zustand des Benutzers und eine Umgebung erfasst, in der der Benutzer aktiv ist,
wobei optional die zwei oder mehr Klangabschnitte aus einer Vielzahl von Klangabschnitten auf der Grundlage von den entsprechenden Merkmalen des bestimmten Textrahmens und ferner auf der Grundlage von der Sensorausgabe ausgewählt werden.

6. Verfahren nach einem der vorhergehenden Ansprüche, wobei die Vielzahl von Textrahmen nicht überlappend ist, und wobei jeder Textrahmen eine eindeutige Teilmenge der Vielzahl von Wörtern enthält.

7. Verfahren nach einem der vorhergehenden Ansprüche, wobei das Erzeugen der Vielzahl von Textrahmen auf der Grundlage von den Textdaten Folgendes aufweist:
Parsen der Textdaten und Segmentieren der geparsten Textdaten in die Vielzahl von Textrahmen auf der Grundlage von Identifizieren eines Textrahmen-Startauslösers oder eines Textrahmen-Endauslösers in den geparsten Textdaten,
wobei optional der Textrahmen-Startauslöser oder der Textrahmen-Endauslöser eines oder mehrere der Folgenden aufweist:
eine Absatzunterbrechung, einen Abschnittskopf oder einen Kapitelkopf, die in den geparsten Textdaten enthalten sind, und/oder
wobei optional das Segmentieren der geparsten Textdaten in die Vielzahl von Rahmen auf einer vorbestimmten Textrahmenlänge basiert.

8. Verfahren nach einem der vorhergehenden Ansprüche, wobei die Textdaten einem der Folgenden entsprechen: einem E-Book, einem Artikel oder einer wissenschaftlichen Publikation.

9. Verfahren nach einem der vorhergehenden Ansprüche, wobei die Textdaten ein Transkript aufweisen, das auf der Grundlage von Audiodaten gesprochen Wortes erzeugt wird,
wobei optional die Audiodaten gesprochen Wortes ein Hörbuch sind, und/oder
wobei optional die Audiodaten gesprochen Wortes durch ein Mikrofon der Benutzervorrichtung aufgenommen werden, und wobei die Textdaten ein Echtzeit-Transkript aufweisen, das unter Verwendung einer Spracherkennungsmaschine erzeugt wird.

10. Verfahren nach Anspruch 9, wobei, wenn die personalisierte Klangumgebung in Echtzeit erzeugt wird, sie ohne Verwendung einer oder mehrerer Volltext-Basislinien erzeugt wird, die für die eingegebenen Textdaten berechnet werden.

11. Verfahren nach Anspruch 9, wobei die personalisierte Klangumgebung in Echtzeit unter Verwendung eines Lautsprechers der Benutzervorrichtung ausgegeben wird und mit den durch das Mikrofon der Benutzervorrichtung aufgenommenen Audiodaten gesprochen Wortes synchronisiert wird.

12. Klangumgebungserzeugungsvorrichtung zum Erschaffen einer personalisierten Klangumgebung für einen Benutzer, die eine Textanalysemaschine (1620, 1720) und eine Klangerzeugungsmaschine (1740) aufweist, wobei die Klangumgebungserzeugungsvorrichtung dazu konfiguriert ist, die Verfahrensschritte eines der vorhergehenden Verfahren durchzuführen.

## Revendications

1. Procédé de création d'un environnement sonore personnalisé pour un utilisateur, le procédé comprenant :
l'obtention de données de texte comprenant une pluralité de mots ;
l'analyse de la pluralité de mots des données de texte pour générer une ou plusieurs lignes de base de texte complet, chaque ligne de base de texte complet indiquant un ou plusieurs éléments parmi une complexité des données de texte, des informations d'analyse sémantique des données de texte, ou un thème des données de texte ;
la génération d'une pluralité de trames de texte sur la base des données de texte, dans lequel chaque trame de texte respective de la pluralité de trames de texte inclut un sous-ensemble de la pluralité de mots ;
l'analyse, à l'aide d'un réseau d'apprentissage machine, de chaque trame de texte respective pour générer une ou plusieurs caractéristiques correspondant à la trame de texte respective et au sous-ensemble de la pluralité de mots, dans lequel l'analyse de chaque trame de texte respective comprend la détermination d'informations d'écart spécifiques à la trame indiquant un écart entre la ligne de base de texte complet et la ou les caractéristiques correspondant à la trame de texte respective, dans lequel la ligne de base de texte complet et la ou les caractéristiques sont calculées à l'aide d'une même métrique d'analyse de texte ;
la détermination de deux sections sonores ou plus pour présentation à un utilisateur, chaque section sonore correspondant à une trame de texte particulière de la pluralité de trames de texte et générée sur la base au moins en partie de la ou des caractéristiques de la trame de texte particulière ;
la génération d'un environnement sonore personnalisé pour présentation à l'utilisateur, dans lequel l'environnement sonore personnalisé inclut au moins les deux sections sonores ou plus ; et
la présentation de l'environnement sonore personnalisé à l'utilisateur sur un dispositif utilisateur.

2. Procédé selon la revendication 1, dans lequel l'environnement sonore personnalisé est présenté à l'utilisateur sur la base de :
la présentation d'au moins une partie des données de texte sur un affichage du dispositif utilisateur ;
la détermination d'une position de lecture actuelle estimée de l'utilisateur, indiquant un emplacement à l'intérieur des données de texte ; et
la synchronisation de la lecture de l'environnement sonore personnalisé avec la présentation des données de texte sur la base de la position de lecture actuelle estimée de l'utilisateur.

3. Procédé selon la revendication 2, dans lequel la synchronisation de la lecture comprend :
la détermination d'une trame de texte correspondante de la pluralité de trames de texte qui inclut la position de lecture actuelle estimée de l'utilisateur ; et
la présentation d'une section sonore respective de l'environnement sonore personnalisé, dans lequel la section sonore respective est une section sonore générée pour la trame de texte correspondante.

4. Procédé selon l'une quelconque des revendications précédentes, dans lequel :
le réseau d'apprentissage machine comprend un réseau neuronal d'analyse sémantique configuré pour déterminer la ou les caractéristiques de la trame de texte respective comme une humeur ou un thème associé à la trame de texte respective ; et/ou
le réseau d'apprentissage machine comprend un réseau neuronal de classification de texte configuré pour déterminer la ou les caractéristiques de la trame de texte respective comme une classification de type de texte associée à la trame de texte respective.

5. Procédé selon l'une quelconque des revendications précédentes, comprenant en outre la réception d'une sortie d'une pluralité de capteurs, la sortie de capteur détectant un état de l'utilisateur et un environnement dans lequel l'utilisateur est actif,
dans lequel facultativement les deux sections sonores ou plus sont sélectionnées parmi une pluralité de sections sonores sur la base des caractéristiques correspondantes de la trame de texte particulière et en outre sur la base de la sortie de capteur.

6. Procédé selon l'une quelconque des revendications précédentes, dans lequel la pluralité de trames de texte ne se chevauchent pas, et dans lequel chaque trame de texte inclut un sous-ensemble unique de la pluralité de mots.

7. Procédé selon l'une quelconque des revendications précédentes, dans lequel la génération de la pluralité de trames de texte sur la base des données de texte comprend :
l'analyse syntaxique des données de texte et la segmentation des données de texte analysées syntaxiquement en la pluralité de trames de texte sur la base de l'identification d'un déclencheur de début de trame de texte ou d'un déclencheur de fin de trame de texte dans les données de texte analysées syntaxiquement,
dans lequel facultativement le déclencheur de début de trame de texte ou le déclencheur de fin de trame de texte comprend un ou plusieurs parmi :
une rupture de paragraphe, un en-tête de section, ou un en-tête de chapitre inclus dans les données de texte analysées syntaxiquement, et/ou
dans lequel facultativement la segmentation des données de texte analysées syntaxiquement en la pluralité de trames est basée sur une longueur de trame de texte prédéterminée.

8. Procédé selon l'une quelconque des revendications précédentes, dans lequel les données de texte correspondent à l'un parmi : un livre électronique, un article, ou une publication scientifique.

9. Procédé selon l'une quelconque des revendications précédentes, dans lequel les données de texte comprennent une transcription générée sur la base de données audio de parole parlée,
dans lequel facultativement les données audio de parole parlée sont un livret audio, et/ou
dans lequel facultativement les données audio de parole parlée sont capturées par un microphone du dispositif utilisateur, et dans lequel les données de texte comprennent une transcription en temps réel générée à l'aide d'un moteur de reconnaissance vocale.

10. Procédé selon la revendication 9, dans lequel lorsque l'environnement sonore personnalisé est généré en temps réel, il est généré sans utiliser une ou plusieurs lignes de base de texte complet calculées pour les données de texte d'entrée.

11. Procédé selon la revendication 9, dans lequel l'environnement sonore personnalisé est délivré en sortie en temps réel à l'aide d'un haut-parleur du dispositif utilisateur, et est synchronisé avec les données audio de parole parlée capturées par le microphone du dispositif utilisateur.

12. Dispositif de génération d'environnement sonore pour créer un environnement sonore personnalisé pour un utilisateur, comprenant un moteur d'analyse de texte (1620, 1720) et un moteur de génération de son (1740), le dispositif de génération d'environnement sonore étant configuré pour effectuer les étapes de procédé de l'un quelconque des procédés précédents.
